(19) Europäisches Patentamt
European Patent Office
Office européen des brevets

(11) **EP 1 775 851 B1**

(12) **EUROPÄISCHE PATENTSCHRIFT**

(45) Veröffentlichungstag und Bekanntmachung des Hinweises auf die Patenterteilung:
**19.01.2011  Patentblatt 2011/03**

(51) Int Cl.:
*H04B 3/32* *(2006.01)*    *H04B 3/23* *(2006.01)*

(21) Anmeldenummer: **05022348.6**

(22) Anmeldetag: **13.10.2005**

(54) **Kompensationsschaltung, Kompensationseinheit, Verfahren zur Kompensation des Nebensprechens.**

Crosstalk compensation circuit, unit and method

Circuit, unité et méthode de compensation de la diaphonie

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**18.04.2007  Patentblatt 2007/16**

(73) Patentinhaber: **Broadband United GmbH 93047 Regensburg (DE)**

(72) Erfinder:
• **Huber, Johannes, Prof. Dr. 91694 Langensendelbach (DE)**
• **Berold, Ulrich 90427 Nürnberg (DE)**
• **Gerstacker, Wolfgang, Dr. 90482 Nürnberg (DE)**

• **Tzschoppe, Roman 91056 Erlangen (DE)**
• **Fischer, Robert, Dr. 91056 Erlangen (DE)**
• **Busboom, Axel, Dr. 91364 Unterleinleiter (DE)**
• **Broll, Axel 91320 Ebermannstadt (DE)**
• **Herrmann, Georg 91329 Ebermannstadt (DE)**

(74) Vertreter: **Dreykorn-Lindner, Werner Patentanwalt Steinlachstrasse 2 90571 Schwaig (DE)**

(56) Entgegenhaltungen:
**EP-A- 0 902 550    US-A1- 2002 051 395
US-A1- 2003 142 688    US-B1- 6 775 529**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

# EP 1 775 851 B1

**Beschreibung**

Die Erfindung betrifft eine Kompensationsschaltung, eine Kompensationseinheit und ein Verfahren zum Kompensieren des Nebensprechens nach den Oberbegriffen der unabhängigen Patentansprüche. Eine solche Schaltung, Einheit und Verfahren sind aus der WO 03/009490 A3 bekannt. Die Vorrichtung umfasst ein adaptives Filter, das ein Ausgangssignal zur Korrektur des auf einer ersten Datenleitung übertragenen Signals erzeugt, wobei als Referenzsignal für das adaptive Filter wenigstens ein von einer zweiten Datenleitung übertragenes Signal oder ein externes Signal verwendet wird. In der Vorrichtung wird eingangs- wie ausgangsseitig eine Gabel vorgesehen, die die bidirektionale Datenleitung in zwei unidirektionale Adernpaare aufteilt, wobei eines der Adernpaare korrigiert wird.

Die US 5 271 037 beschreibt eine Leitungsausstattung zum Kompensieren von Nebensprechen. Hier werden unidirektionale Leitungen durch adaptive Filter bezüglich des Nebensprechens kompensiert. Die adaptiven Filter erhalten ihr Referenzsignal von benachbarten Signalquellen.

Aufgabe der Erfindung ist es, ein Verfahren zur NebensprechKompensation und eine Kompensationsschaltung und eine Kompensationseinheit anzugeben, die einen für mindestens Gleichstrom ununterbrochenen Lauf der Leitung bei hochwertiger Kompensation des Nebensprechens auf dieser Leitung erlauben.

Eine weitere Aufgabe der Erfindung ist es, ein Nebensprech-Kompensationsverfahren und eine Kompensationsschaltung und eine Kompensationseinheit anzugeben, die ohne eine Gabelschaltung zur Trennung von Empfangs- und Senderichtung der Signale auskommen.

Diese Aufgabe wird mit den Merkmalen der unabhängigen Patentansprüche gelöst. Abhängige Patentansprüche sind auf bevorzugte Ausführungsformen der Erfindung gerichtet.

Eine erfindungsgemäße Kompensationsschaltung für das Nebensprechen weist eine Kompensationseinrichtung auf, die einen vorzugsweise hochohmigen Störsignaleingang hat, und eine Kompensationssignalquelle, die nach Maßgabe des Störsignals ein Kompensationssignal zur Beaufschlagung der zu kompensierenden Signalleitung erzeugt. Die Kompensationssignalquelle weist eine steuerbare Stromquelle auf, die als Kompensationssignal einen gesteuerten Kompensationsstrom erzeugt, der für die parallele Einspeisung in die zu kompensierende Signalleitung vorgesehen ist.

Eine Kompensationseinheit hat mehrere Kompensationsschaltungen für mehrere Signalleitungen.

Bei einem Nebensprech-Kompensationsverfahren wird nach Maßgabe eines nebensprechenden Signals ein Kompensationsstrom erzeugt, der parallel in die zu kompensierende Signalleitung eingespeist wird. Der Kompensationsstrom wird in seinem Wert gesteuert und parallel zum Signalstrom in die Signalleitung eingespeist. Es wird nicht eine gesteuerte Kompensationsspannung seriell eingespeist.

Wegen der parallelen Einspeisung des Kompensationsstroms kann die zu kompensierende Signalleitung mindestens für Gleichstrom ununterbrochen bleiben. Damit erlaubt die Leitung das einfache Fernspeisen von Telekommunikationskomponenten über die Signalleitung mit Gleichspannung.

Erfindungsgemäß wird zur Erzeugung des kompensierenden Signals die Nebensprech-Impulsantwort des Systems bestehend aus Nebensprechquelle, Nebensprechsignal und zu kompensierende Signalleitung zur Kompensation verwendet, insbesondere indem sie zur Nachbildung eines zum Nebensprechen gegengleichen Signals herangezogen wird. Die Nebensprechimpulsantwort kann durch geeignete, zu beschreibende Verfahren ermittelt bzw. abgeschätzt werden und dann nachgebildet und mit dem nebensprechenden Signal beaufschlagt werden, um so das Kompensationssignal zu erzeugen.

Nachfolgend werden Bezug nehmend auf die Zeichnungen einzelne Ausführungsformen der Erfindung beschrieben, es zeigen:

Fig. 1     eine erste Ausführungsform einer Kompensationsschal- tung nach der Erfindung,

Fig. 2     eine ausführlichere Darstellung der erfindungsgemäßen Schaltung,

Fig. 3     eine Skizze zur Erläuterung der Nebensprech- Impulsantwort,

Fig. 4     eine Schaltung zur Erzeugung des Kompensations- Steuerungssignals,

Fig. 5a     die Schaltung eines analog implementierten Verzögerungs- glieds,

Fig. 5b     die Verschaltung der Verzögerungsglieder in Bezug auf den Signalabgriff,

Fig. 6a     die schematische Darstellung des Nebensprechsystems ohne Kompensation,

Fig. 6b     die schematische Darstellung des Nebensprechsystems mit Kompensation,

Fig. 7 die schematische Darstellung einer ersten Ausführungs- form einer Ermittlungseinrichtung,

Fig. 8 die schematische Darstellung einer zweiten Ausführungs- form einer Ermittlungseinrichtung,

Fig. 9 die schematische Darstellung einer Kompensationseinheit, und

Fig. 10 eine weitere Ausführungsform einer Kompensationsschal- tung nach der Erfindung.

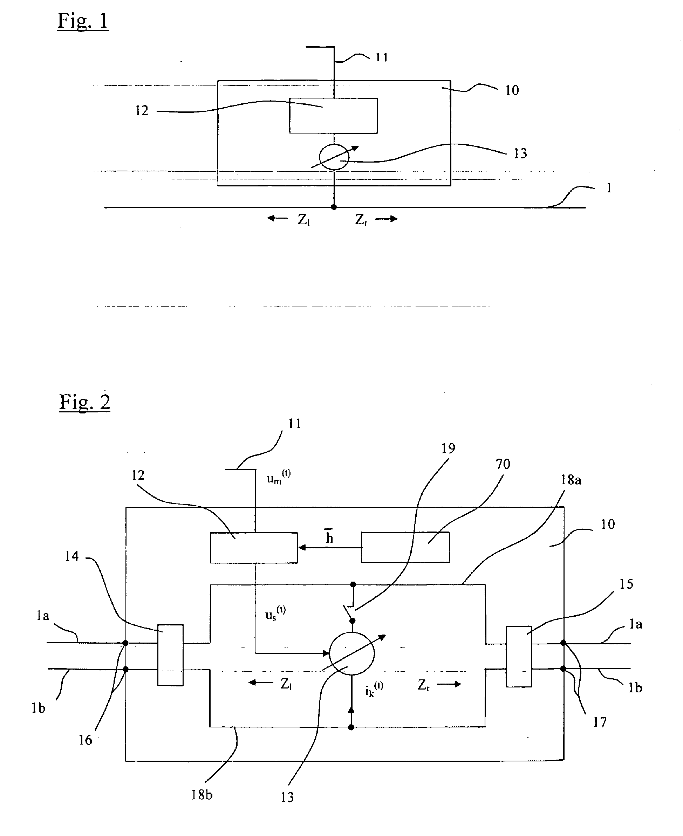

Fig. 1 zeigt schematisch eine erfindungsgemäße Kompensationsschaltung 10. Sie dient der Kompensation des Nebensprechens auf einer Signalleitung 1. Die Signalleitung 1 kann eine Leitung in einem öffentlichen Kommunikationsnetz sein, beispielsweise eine Telefonieleitung. Sie kann uni- oder bidirektional sein. Es kann sich bei ihr um eine Doppelader handeln. Sie kann in einem Leitungsbündel mehrerer benachbarter Leitungen 1 laufen, wobei dann die anderen, benachbarten Leitungen 1 Nebensprechquellen sind. Es kann sich bei der Leitung 1 aber auch um Datenleitungen in der Datenübertragung handeln, beispielsweise um eine Busleitung, etwa um einen Feldbus, eine CAN-Leitung oder Ähnliches.

Die Kompensationsschaltung 10 weist eine Stromquelle 13 auf, die einen Strom zur Kompensation des Nebensprechens parallel in die Leitung 1 einspeist. 11 ist ein vorzugsweise hochohmiger (Spannungs-) Signaleingang, der das nebensprechende Signal als Störsignal empfängt, nach dessen Maßgabe eine Kompensationssteuerung 12 die steuerbare Stromquelle 13 zur Einstellung des gesteuerten Stroms ansteuert.

Da der Strom parallel eingespeist werden kann, kann eine Auftrennung der Signalleitung 1 unterbleiben. In der gezeigten Ausführungsform ist lediglich eine Anzapfung zur Einleitung des Kompensationsstroms notwendig. Der Störsignaleingang 11 kann durch einen hochohmigen Messverstärker gebildet sein, der beispielsweise das nebensprechende Signal auf einer benachbarten Leitung galvanisch abgreift. Es kann sich aber auch um beispielsweise eine induktive Erfassung des nebensprechenden Signals handeln. Die Kompensationssteuerung 12 erzeugt in geeigneter und in bestimmten Ausführungsformen noch zu beschreibender Weise das Steuerungssignal zur Ansteuerung der Stromquelle 13.

Fig. 2 zeigt in Kombination mehrere weitere Ausführungsformen der erfindungsgemäßen Kompensationsschaltung. Anders als in Fig. 1 wird die Signalleitung 1 - hier als Aderpaar mit den Adern 1a und 1b dargestellt - durch die Schaltung hindurchgeleitet. 18a und 18b sind die Durchleitungen der Signalleitung mit den Adern 1a und 1 b. Die Signalleitung 1 wird an die Anschlüsse 16 und 17 angeschlossen. 14 und 15 symbolisieren später beschriebene Verzögerungs-schaltungen, die in bestimmten Ausführungsformen vorgesehen sein können, aber nicht immer vorgesehen sein müssen. In der einfachsten Ausführungsform ist die Signaldurchleitung 18 eine direkte Leitung in der Schaltung vom einen Anschluss 16 zum anderen Anschluss 17.

13 symbolisiert abermals die gesteuerte Stromquelle, die den zeitabhängigen Kompensationsstrom $i_k(t)$ nach Maßgabe des ansteuernden Signals $u_s(t)$ aus der Kompensationssteuerung 12 erzeugt. In der Ausführungsform der Fig. 2 ist die gesteuerte Stromquelle 13 zwischen das Adernpaar 18a, 18b der Durchleitung 18 geschaltet. Die Kompensationssteuerung 12 erzeugt das Ansteuerungssignal $u_s(t)$ so, dass die gesteuerte Stromquelle 13 einen zum Nebensprechstrom in der Signalleitung 1 und der Durchleitung 18 gegengleichen Kompensationsstrom erzeugt, sodass sich die dem Signal überlagerte Nebensprechkomponente auf der Signalleitung 1 und der Kompensationsstrom weitestmöglich auslöschen bzw. kompensieren.

Die Kompensationssteuerung 12 kann vergleichsweise komplex sein und nach Maßgabe von einem oder mehreren Parametern bzw. Koeffizienten, die mit h symbolisiert werden, aus dem Störsignal $u_m(t)$ das Steuerungssignal $u_s(t)$ erzeugen. Die Koeffizienten h können von einer Ermittlungseinrichtung 70 einmalig oder auch wiederholt ermittelt und der Kompensationssteuerung 12 eingeschrieben werden.

Die Nebensprechkompensation kann ein- und ausschaltbar sein. Hierzu ist ein Schalter 19 im Stromzuführzweig angedeutet. Statt eines Schalters kann aber auch das Steuern der Stromquelle auf Null vorgesehen sein.

Zur amplitudenmäßigen richtigen Einstellung des Kompensationsstroms kann der Leitungswiderstand Zo berücksichtigt werden, wie ihn die Stromquelle 13 an ihren Anschlüssen "sieht": Letztlich wirkt am Anschluss der gesteuerten Stromquelle 13 eine Parallelschaltung aus rechtsseitigem Widerstand $Z_r$ und linksseitigem Widerstand $Z_1$, die jeweils den Widerstand der Leitung selbst sowie über die Leitungslänge transformierte Widerstände von entfernten Leitungsabschlüssen und Widerständen enthalten. Für den am Stromquellenausgang wirkenden Widerstand $Z_0$ gilt:

$$1/Z_0 = 1/Z_l + 1/Z_r.$$

Unter Berücksichtigung des am Stromquellenausgang wirkenden Gesamtwiderstands kann der gesteuerte Strom so eingestellt werden, dass er zusammen mit dem wirksamen Widerstand Zo eine bestimmte Spannung hervorruft, die die Nebensprechspannung kompensierend überlagert.

Mit der beschriebenen Schaltung ist keine galvanische Auftrennung der Signalleitung 1 notwendig, eine Gabelschaltung kann entfallen, und Schutzeinrichtungen am Kabel und in den Endgeräten bleiben wirksam. Die ununterbrochene Leitung erlaubt die Fernspeisung von TeleKommunikationskomponenten mittels einer überlagerten Gleichspannung. Bis auf die kompensierende Überlagerung des parallel eingespeisten Kompensationsstroms bleibt der Betriebszustand unverändert. Es liegen die gleichen Impedanzverhältnisse wie beim Betrieb ohne Kompensationseinrichtung vor. Sowohl die Auskopplung des Messsignals als auch die Einkopplung des Kompensationsstroms erfolgen bei sehr hohen Innenwiderständen. Eine Belastung des Adernpaars ist damit ausgeschlossen.

Anstelle einer Stromquelle 13, die zwischen die zwei Adern des Adernpaars 1a, 1b bzw. der Durchleitung 18a, 18b geschaltet wird, können in einer nicht gezeigten Ausführungsform auch zwei gesteuerte Stromquellen vorgesehen sein, die jeweils mit einem Anschluss mit einer der zwei Adern verbunden sind, wobei der jeweils andere Anschluss mit einem den beiden Stromquellen gemeinsamen Bezugspunkt, etwa Masse der Gesamtschaltung, verbunden sind. Die Stromquellen können identische Steuersignale erhalten. Dadurch wird die Symmetrie der gegengleichen Einspeisung des Kompensationsstroms nicht aufgegeben, aber die Schaltungstechnik durch Bezug der gesteuerten Stromquelle auf einen Massepunkt der Schaltung vereinfacht.

Die Kompensationssteuerung 12 kann das Nebensprechen anhand der Nebensprechimpulsantwort h(t) (Zeitbereich) bzw. Nebensprechübertragungsfunktion H(f) (Frequenzbereich) nachbilden. Die Impulsantwort kann parametrisiert etwa als mehrere Abtastwerte über der Zeit vorliegen und durch eine entsprechende Schaltung in der Kompensationssteuerung proportional dem jeweils geltenden Störsignal nachgebildet werden. Mathematisch entspricht dies einer Faltung des Störsignals $U_m(t)$ mit der Impulsantwort h(t).

Die Kompensationseinrichtung kann ein adaptives Filter sein oder aufweisen. Das adaptive Filter wird vom zu filternden Signal auf der Signalleitung 1 durchlaufen. Die Referenzspannung des adaptiven Filters entspricht dem Störsignal $u_m(t)$. Das adaptive Filter kann Filterkoeffizienten aufweisen, nach deren Maßgabe die Filterung erfolgt. Die Filterkoeffizienten können einmalig oder mehrmalig eingestellt werden. Die Filterkoeffizienten können Koeffizienten sein, die die Nebensprech-Impulsantwort wie oben beschrieben beschreiben, beispielsweise als Abtastwerte über der Zeit. Das adaptive Filter speist einen geeignet gesteuerten Strom parallel in die Signalleitung 1 bzw. die Durchleitung 18 ein.

Das adaptive Filter bzw. die Kompensationseinrichtung und hier insbesondere die Kompensationssteuerung 12 können analog und/oder digital aufgebaut sein. Ein analoger Aufbau hat den Vorteil, dass er schnell ist, aber insbesondere in seiner Adaptivität nur aufwändig einstellbar ist. Digitale Implementierungen haben den Vorteil, dass die Adaptierung durch Übernahme neuer Parameter in einfacher Weise möglich ist. Wegen der eingangs notwendigen Analog Digital Wandlung und der ausgangs notwendigen Digital-Analog-Wandlungen und der getakteten Arbeitsweise im digitalen Teil sind digitale Implementierungen aber langsamer als analoge Implementierungen und können zum Ausregeln von schnellen bzw. frühen bzw. hochfrequenten Störungen zu langsam sein.

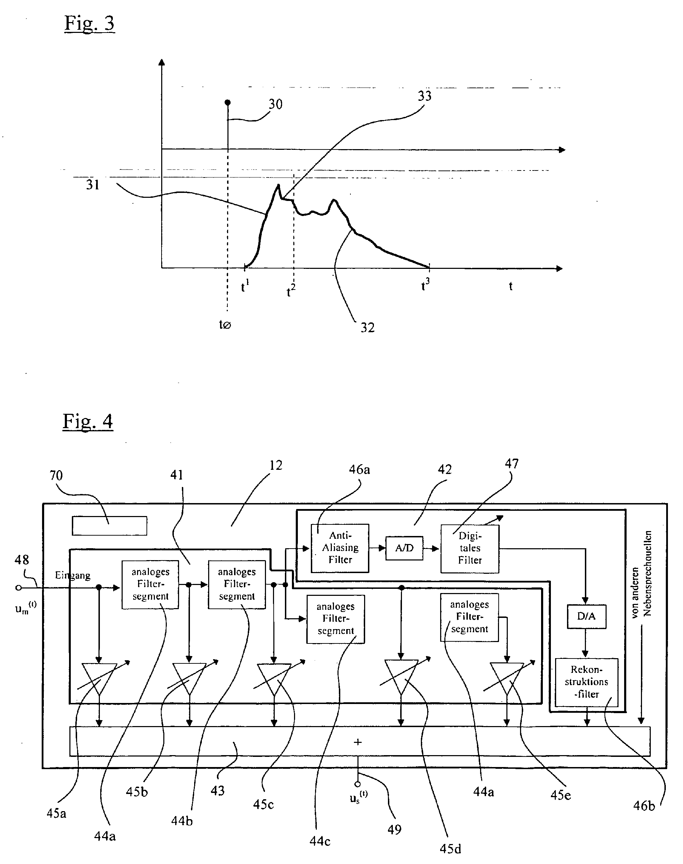

Da bei der erfindungsgemäßen Kompensationsschaltung eine ununterbrochene Signalleitung angestrebt wird, gibt es keine Möglichkeit, das die Signalleitung durchlaufende Signal "aufzuhalten" oder zu verzögern, um gegebenenfalls langsamen Filtern bzw. Kompensationseinrichtungen die nötige Zeit zur Filterung bzw. gegengleichen Kompensationssignalerzeugung zu verschaffen. Dies spricht für den analogen Aufbau der Kompensationseinrichtung bzw. des adaptiven Filters. Da andererseits auch langsame Teile der Systemreaktion (z. B. der Impulsantwort) zur Kompensation nachzubilden sind, können diese langsamen Teile digital nachgebildet werden. In einer bevorzugten Ausführungsform ist deshalb die Kompensationseinrichtung bzw. das adaptive Filter gemischt analog und digital aufgebaut. Die analogen Teile bilden frühe bzw. schnelle Teile der Systemantwort nach, während der digitale Teil spätere bzw. langsamere Teile der Systemantwort nachbildet. Bezug nehmend auf Fig. 3 werden die diesbezüglichen Gedanken erläutert.

Fig. 3 zeigt im oberen Diagramm mit 30 einen Impuls 30, der als ein Teil eines nebensprechenden Signals angesehen werden kann. Der Impuls 30 läuft beispielsweise auf einer zur zu kompensierenden Signalleitung 1 benachbarten Signalleitung. Der Impuls 30 bewirkt auf der zu kompensierenden Signalleitung 1 eine Impulsantwort 33, die über die Zeit verteilt und veränderlich ist. Die Impulsantwort 33 weist eine frühen Teil 31 und einen nach dem frühen Teil kommenden späten Teil 32 auf. Die gedachte Trennlinie ist der Zeitpunkt t2. Die Leitungen 1 und 1' können mit ihrer Nebensprechverkopplung als Nebensprechsystem betrachtet werden. Dementsprechend zeigt Fig. 3 die ausgehende Impulsantwort des Nebensprechsystems auf einen eingehenden, anregenden Impuls hin

Der idealisierte Nebensprechimpuls 30 wurde zum Zeitpunkt t0 angenommen. Mehr oder minder verzögert dazu, nämlich zum Zeitpunkt t1, beginnt die Nebensprech-Impulsantwort 33 auf der zu kompensierenden Signalleitung 1, die zum Zeitpunkt t3 praktisch abgeklungen ist.

Reale Größenordnungen sind wie folgt: Analoge Telefonie liegt im Frequenzbereich unter 10 kHz. ISDN-Übertragung liegt im Frequenzbereich bis ca. 150 kHz. DSL liegt im Frequenzbereich bis etwa 1 MHz, wobei neuere technische Entwicklungen auch bis hin zu mehreren MHz gehen. Das Nebensprechen auf Leitungen entsteht im Wesentlichen auf den einigen Hundert letzten Metern des einlaufenden Signals, wenn ihm benachbart ein noch starkes Signal ausgesendet wird. Entsprechend den Signallaufzeiten bedeutet dies, dass der Zeitversatz zwischen t0 und t1 in Fig. 3 vergleichsweise gering sein kann und möglicherweise nur wenige zehn bis 100 ns beträgt. Wenn andererseits angenommen wird, dass der störende Impuls 30 nur auf den ersten 500 m seines Laufs stört und das Nebensprechsignal dann diese 500 m wieder zurücklaufen muss, ergibt sich eine Gesamtlauflänge von einem Kilometer, was je nach Ausbreitungsgeschwindigkeit einer effektiven Dauer der Nebensprech-Impulsantwort von einigen (3 bis 5) Mikrosekunden entspricht.

Ein früher Teil 31 der Impulsantwort 33 kann analog und deshalb schnell nachgebildet werden, während ein später Teil 32 digital und also langsamer nachgebildet werden kann. Es ist dann lediglich für einen Teil des adaptiven Filters bzw. der Kompensationsschaltung die aufwändige analoge Schaltungstechnik notwendig. Der restliche Teil kann digital und deshalb insbesondere in der Adaptivität weniger aufwändig nachgebildet werden.

Fig. 4 zeigt eine gemischt analog-digitale Ausführungsform eines digitalen Filters bzw. einer Kompensationssteuerung 12. 41 ist ein analoger Block, 42 ein digitaler. Sie wirken in der Weise parallel, dass sie Kompensationskomponenten erzeugen, die im Summierer 43 summiert und als Ansteuersignal $u_s$(t) für die gesteuerte Stromquelle ausgegeben werden. Trotz der funktionalen Parallelität können die einzelnen Signalanteile zeitlich seriell entsprechend dem zeitlichen Verlauf der Impulsantwort entstehen. Das Nebensprechsignal $u_m$(t) liegt am Eingang 48 an. Das Ausgangssignal $u_s$(t) liegt am Ausgang 49 an.

In der gezeigten Ausführungsform durchläuft das Signal vom Eingang 48 her eine Serie analoger Filtersegmente 44a - 44d, die einen bestimmten Amplituden- und einen bestimmten Phasengang erzeugen, wobei Phasengang letztlich auch ausgehend vom Eingang 48 eine zunehmende zeitliche Verzögerung des Eingangssignals entsprechend der zunehmenden Anzahl der durchlaufenen Filtersegmente 44a - 44d bedeutet. Von dieser Filterkette werden Signalanteile durch Abgriffe 45a - 45e herausgeführt. Die Abgriffe können Vier-Quadranten-Verstärker sein, die auch als Digitalpotentiometer oder durch Digital-Analog-Umsetzer implementiert sein können. Auch die Filtersegmente 44a - 44d können einstellbar sein. Die Einstellungen der Abgriffe 45 und der Filtersegmente 44 können so sein, dass der erste Teil 31 der Impulsantwort 33, wie es in Fig. 3 gezeigt ist, etwa in Form mehrerer Stützstellen nachgebildet wird, sodass ein Impuls am Eingang 48 als Antwort eine Kurve am Ausgang 49 entsprechend dem ersten Teil 31 der Impulsantwort erzeugen würde. 50 bezeichnet einen kompensierenden Anteil von anderen, beispielsweise externen Kompensationsquellen, mit denen andere, beispielsweise externe Nebensprechquellen kompensiert werden können.

Die Darstellung der Fig. 3 ist eine Darstellung im Zeitbereich. In einer Darstellung im Frequenzbereich würden sich über der Frequenz bestimmte Amplituden- und Phasenverläufe ergeben. Die Amplituden- und Phasenverläufe, die sich bei einer Darstellung der Nebensprech-Impulsantwort der Fig. 3 im Frequenzbereich ergeben würden, können mindestens in ihrem frühen Teil 31 durch die Filtersegmente 44 und Abzweigungen 45 nachgebildet werden.

An geeigneter Stelle der Filterkette wird das anliegende Signal abgegriffen und dem digitalen Block 42 zugeführt. Eingangsseitig kann ein Anti-Aliasing-Filter 46a, ausgangsseitig ein Rekonstruktionsfilter 46b vorgesehen sein. 47 symbolisiert ein digitales Filter, das einen komplexen Signalnachbau implementieren kann, indem beispielsweise das einlaufende Signal mit dem durch Koeffizienten beschriebenen späteren Teil 32 der Impulsantwort verrechnet wird (etwa durch Faltung im Zeitbereich bzw. Multiplikation im Frequenzbereich). Auf diese Weise entsteht die Nachbildung der späteren Teile 32 der Impulsantwort, die im Addierer 43 funktionell parallel, aber zeitlich später zu den schon erzeugten analogen Teilen der Impulsantwort addiert und als Gesamtsteuersignal $u_s$(t) ausgegeben werden. Der Abgriff für den digitalen Teil 42 erfolgt vor dem letzten analogen Filter- bzw. Verzögerungssegment, um der digitalen Komponente die für die Wandlungen und einzelnen Prozessschritte entsprechend der Taktung notwendige Zeit zu geben. Der Abgriff kann anders als in Fig. 4 gezeigt am Signaleingang erfolgen.

Um mit dem gemischt analog-digitalen Filter bzw. der Kompensationssteuerung eine Übertragungsfunktion eines rein digitalen Filters implementieren zu können, ist eine Umrechnung der digitalen Filterkoeffizienten in einen Satz von analogen und digitalen Filterkoeffizienten notwendig. Nachfolgend wird ein hierzu geeignetes Umrechnungsverfahren beschrieben.

Um eine möglichst gute Übereinstimmung der Übertragungsfunktion $H_D(f)$ des digitalen Filters mit der des gemischt analog-digitalen Filters $H_{A/D}(f)$ zu erhalten, wird gefordert dass beide Übertragungsfunktionen an N Stützstellen im Frequenzbereich $0 \leq f \leq B \leq f_A/2$ im Sinne des kleinsten mittleren quadratischen Fehlers (MMSE-Kriterium) übereinstimmen sollen. $B$ bedeutet dabei den Frequenzwert der letzten Stützstelle und $f_A = 1/T_A$ die Taktfrequenz des digitalen Filters. Die Anordnung der Stützstellen ist prinzipiell beliebig. Durch geeignete Wahl kann die Güte der Approximation in einem gewünschten Frequenzbereich gezielt beeinflusst werden. Im einfachsten Fall sind die Stützstellen äquidistant angeordnet: $f_\gamma = \gamma \cdot B/N$ (mit $\gamma = 1,...,N$). Die Übertragungsfunktion des digitalen Filters lautet:

$$H_D(f) = \sum_{k=0}^{q_D} h_D[k]\left(e^{-j2\pi f T_A}\right)^k$$

Der Vektor der Werte der Übertragungsfunktion an den Stützstellen

$$\bar{H}_D = \left[ H_D(f_1), H_D(f_2), \ldots, H_D(f_N) \right]^{\mathrm{T}}$$

lässt sich durch Multiplikation der Matrix , mit Elementen $H_{D_{r,k}} = \left( e^{-j2\pi f_r T_A} \right)^k$, mit dem Vektor der Koeffizienten des digitalen Filters

$$\bar{h}_D = \left[ h_D[0], h_D[1], \ldots, h_D[q_D] \right]^{\mathrm{T}}$$

wie folgt darstellen:

$$\bar{H}_D = \overline{H}_D \bar{h}_D$$

Mit der Übertragungsfunktion des gemischt analog-digitalen Filters $H_{A/D}(f)$ kann in analoger Weise der Vektor der Werte der Übertragungsfunktion an den Stützstellen

$$\bar{H}_{A/D} = \left[ H_{A/D}(f_1), H_{A/D}(f_2), \ldots, H_{A/D}(f_N) \right]^{\mathrm{T}}$$

durch Multiplikation der Matrix $\overline{H}_{A/D}$ mit dem Vektor der Koeffizienten des gemischt analog/digitalen Filters

$$\bar{h}_{A/D} = \left[ h_{A/D}[0], h_{A/D}[1], \ldots, h_{A/D}[q_{A/D}] \right]^{\mathrm{T}}$$

dargestellt werden:

$$\bar{H}_{A/D} = \overline{H}_{A/D} \bar{h}_{A/D}$$

In der Matrix $\overline{H}_{A/D}$ der Dimension $N \times (q_{A/D} + 1)$ stehen dabei spaltenweise die Werte der Übertragungsfunktionen durch die einzelnen Abzweigpfade (Pfad von Eingang zu Ausgang, gesteuert durch einen einzelnen analogen oder digitalen Koeffizienten) des gemischt analog/digitalen Filters an den Stützstellen $f_r$.

Setzt man $\overline{H}_D = \overline{H}_{A/D}$ so ergibt sich ein überbestimmtes Gleichungssystem zur Bestimmung des Koeffizien-tenvektors $\bar{h}_{A/D}$. Unter der Randbedingung reellwertiger Koeffizienten liefert die Lösung im Sinne des MMSE

$$\vec{h}_{A/D} = \overline{M} \cdot \vec{h}_D$$

mit der Matrix $\overline{M} = \left(\Re\left\{\overline{H}_{A/D}^H \overline{H}_{A/D}\right\}\right)^{-1} \Re\left\{\overline{H}_{A/D}^H \overline{H}_D\right\}$ ($(\cdot)^H$ bedeutet hermitesch, d.h. konjugiert und transponiert; R{·} bezeichnet die Realteilbildung). Alternativ kann die Reellwertigkeit durch das Ausnutzen der Symmetriebeziehungen im Spektralbereich eines reellwertigen Signals erzwungen werden; hierfür werden dann aber auch Stützstellen auf der negativen Frequenzachse erforderlich.

Die Matrix $\overline{M}$ ist bei festen Stützstellen nur durch die Struktur und die eingesetzten analogen Filtersegmente des gemischt analog-digitalen Filters bestimmt, und daher fest. Sie kann vorteilhaft vorab berechnet und dann im Speicher der Kompensationseinrichtung abgelegt werde.

Im laufenden Betrieb der Kompensationseinrichtung sind zunächst als Ergebnis der Filteradaptionsalgorithmen die Koeffizienten der rein digitalen Filterstruktur bekannt. Durch Multiplikation mit der konstanten Matrix $\overline{M}$ ergeben sich dann die Koeffizienten der gemischt analog-digitalen Struktur, die zur Einstellung der analogen sowie der digitalen Anteile des Filters benötigt werden.

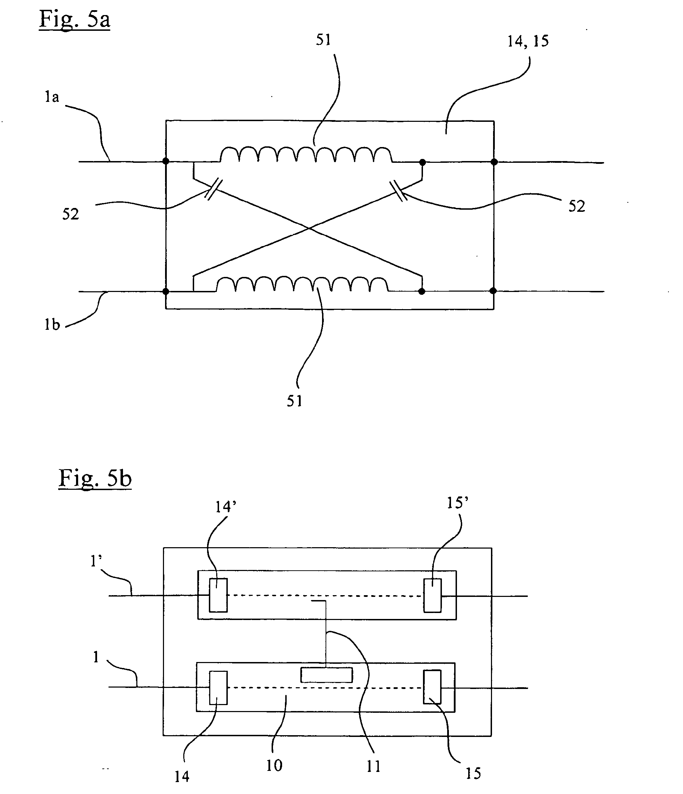

Es wird nun auf Fig. 5 Bezug genommen. Die Kompensationsschaltung kann an ihren beiden Eingängen/Ausgängen Verzögerungs-schaltungen bzw. Totzeitschaltungen 14, 15 aufweisen. Sie sollen die Nebensprech-Impulsantwort auf einem Fernmeldkabel verzögern, sodass dementsprechend eine Kompensationseinrichtung 11 - 13 mehr Zeit hat, die Kompensation zu bewirken, sodass der analoge Schaltungsaufwand sinkt oder sogar ganz unterbleiben kann. Fig. 2 zeigt ein Totzeitglied 14, 15 schematisch als Block unmittelbar vor dem links- und rechtsseitigen Eingang/Ausgang. Ein solches Totzeitglied soll idealerweise einen möglichst konstanten Amplitudengang und eine konstante Gruppenlaufzeit haben, sodass es ein einlaufendes Signal qualitativ im Wesentlichen unverändert läßt und es lediglich um eine bestimmte Zeit τ verzögert.

Fig. 5 zeigt eine Ausführungsform eines analogen Totzeitglieds. Es weist längs in die Adern 1a, 1b der Signalleitung bzw. der Durchleitung 18 eingeschaltete Induktivitäten 51 gleicher Größe auf, und zwei jeweils diagonal verschaltete Kapazitäten 52 ebenfalls gleicher Größe. Mehrere solcher Schaltungen können vor einem oder beiden Eingängen/Ausgängen in Serie geschaltet sein.

Fig. 5b zeigt die Überlegungen im Hinblick auf mehrere Signalleitungen 1 und 1' systematisch. Angenommen wird, dass 1' die Nebensprechquelle, also das störende Signal ist, während 1 die zu kompensierende Leitung ist. Die Kompensationsschaltung 10 greift das störende Signal von der nebensprechenden Leitung 1' zwischen den für sie ebenfalls vorgesehenen Totzeitgliedern 14', 15' ab. Bis das nebensprechende Signal allerdings wirksam wird, muss es (z. B. nach rechts betrachtet) die zwei Totzeitglieder 15' und 15 durchlaufen. Dementsprechend erhält man einen Zeitgewinn von 2 τ (bei gleichen Verzögerungszeiten τ der Totzeitglieder 15 und 15'), sodass dementsprechend die Kompensationsschaltung bzw. Kompensationssteuerung bzw. das adaptive Filter langsamer und weniger aufwändig aufgebaut sein können.

Die Schaltung der Fig. 5a eignet sich für eine als Doppelader aufgebaute Signalleitung. In gewissem Umfang sind Abweichungen vom idealen Verlauf (konstanter Amplitudengang, konstante Gruppenlaufzeit) hinnehmbar, da es auf Signalleitungen ohnehin starke lineare Verzerrungen eines Signals bezüglich seiner Amplitude und seiner Phase gibt. Zur Korrektur dieser Verzerrung sind ohnehin adaptive Kanalentzerrer vorgesehen, die auch Abweichungen des beschriebenen Totzeitglieds bzw. entsprechender Kaskaden korrigieren können.

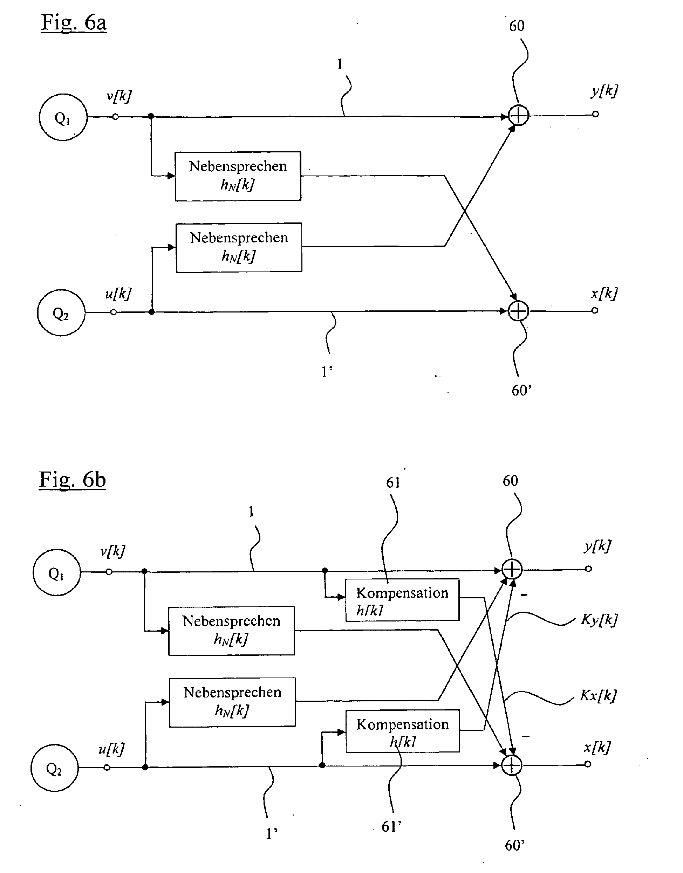

Im Folgenden wird Bezug nehmend auch auf die Figuren 6a und 6b die Adaption des adaptiven Filters bzw. der Kompensationseinrichtung beschrieben. Zwei Schritte können hierbei unterschieden werden, nämlich zum einen die vergleichsweise schnelle Adaption bei nicht laufender Kompensation ("Kurzzeitadaption") und zum anderen die langsamere Adaption bzw. Nachführung der Adaption bei laufender Kompensation ("Langzeitadaption"). Die Fig. 6a und 6b zeigen die jeweils geltenden Signalflüsse jeweils schematisch. 1 und 1' symbolisieren zwei getrennte Signalleitungen, die beispielsweise in einem Leitungsbündel parallel laufen. Die transportierte Information wird von den Quellen Q 1 bzw. Q2 geliefert und wird als ideales, ungestörtes zeitdiskrete Signale v[k] bzw. u[k] symbolisiert, wobei durch k fortlaufende Abtastwerte indiziert sind. Die Fig. 6a und 6b zeigen jeweils insofern einfache Systeme, als es sich nur um ein zweikanaliges System mit zwei Signalleitungen 1 und 1' handelt. Es wird angenommen, dass sie sich gegenseitig durch Nebensprechen beeinflussen, dass also dem Signal v[k] aus Q1 ein Nebensprechsignal entsprechend dem Signal u[k] aus Quelle Q2 überlagert wird, was durch die Addition an den Punkten 60 bzw. 60' symbolisiert ist. Fig. 6a zeigt den Fall ohne Kompensation. Es wird darauf hingewiesen, dass die Addition der Nebensprechsignale zu den ungestörten Signalen v[k] bzw. u[k] nicht explizit vorgenommen wird, sondern sich von selbst wegen der nebeneinander laufenden Leitungen bzw. allgemein durch elektromagnetische Störungen und Übertragungen ergibt. Dies bedeutet, dass weder die Signale v[k] und u[k] noch die Nebensprechsignale separat beobachtbar sind. Vielmehr sind lediglich die Signale y[k] und x[k] beobachtbar

Fig. 6b zeigt den Fall mit laufender Kompensation. Zusätzlich zum Fall ohne Kompensation werden die Signale aus den Kästchen 61 bzw. 61' aufaddiert. Diese zusätzliche Aufaddierung erfolgt explizit, die Kompensationssignale sind neben den Signalen y[k] und x[k] separat beobachtbar und berücksichtigbar.

Im Falle der Adaption bei ausgeschalteter Kompensation (Fig. 6a) ist das Nebensprechen im beobachtbaren Signal x[k] bzw. y[k] noch vergleichsweise stark vorhanden, da es nicht kompensiert ist. Im Falle der laufenden Kompensation (Fig. 6b) dagegen ist die Kompensation ja so gewählt, dass sie das Nebensprechen in etwa kompensiert, sodass das verbleibende Nebensprechen vergleichsweise schwach und insoweit hinsichtlich seiner Charakteristik nur schlecht ermittelbar ist.

Es wird zunächst die Adaption bei nicht laufender Kompensation beschrieben. Hierzu kann die Kompensation ausgeschaltet sein, beispielsweise indem die steuerbare Stromquelle auf Strom Null gesteuert wird oder indem schlicht der Schalter 19, wie er in Fig. 2 symbolisiert ist, geöffnet wird.

Es wirkt nun das Nebensprechen von Aderpaar 1 auf Aderpaar 2 und umgekehrt betrachtet. Die Summe aus "idealem" Leitungssignal und Nebensprechen ergeben jeweils das auf der Leitung tatsächlich vorhandene und messbare Signal. Da es sich bei dem Fernmeldekabel um ein rein passives System mit kapazitiver und induktiver Kopplung zwischen den einzelnen Aderpaaren handelt, kann man davon ausgehen, dass das Nebensprechen reziprok ist, dass also Nebensprechübertragungsfunktion bzw. Nebensprechimpulsantwort von Ader 1 auf Ader 2 sowie von Ader 2 auf Ader 1 identisch sind.

Um eine Nebensprechkompensation vornehmen zu können, muss die Nebensprechimpulsantwort $h_N[k]$ bzw. Nebensprechübertragungsfunktion $H_N(z)$ identifiziert werden. Messbar sind dabei die Signale $x[k]$ bzw. $y[k]$ auf den beiden Aderpaaren.

Systemtheoretisch gesehen handelt es sich um ein Systemidentifikationsproblem, wobei - wie aus Abbildung 6a zu ersehen ist - zwei reziprok verkoppelte Systeme gegeben sind. Ein- und Ausgangssignale des unbekannten Systems sind dabei nicht direkt zugänglich; sondern immer nur ein Summensignal aus einem Ein- und einem Ausgangssignal. Besonders erschwerend ist hierbei, dass das Ausgangssignal von dem in der Regel erheblich stärkeren Eingangssignal überdeckt wird. Dieses Eingangssignal ist im Hinblick auf die Systemidentifikation ein unerwünschtes Störsignal. Bei einer typischen Nebensprechdämpfung von beispielsweise 40 dB oder mehr, liegt ein Störabstand von -40 dB oder mehr vor, was die Systemidentifikation massiv erschwert.

Es sind Verfahren zur Systemidentifikation in Anwesenheit einer starken Störung bekannt. Voraussetzung zum Einsatz dieser Verfahrens ist jedoch die Zugänglichkeit des Systemeingangssignals, sowie des (stark gestörten) Systemausgangssignals. Im Falle von reziprok verkoppelten Systemen ohne direkten Zügriff auf die Systemeingangssignale (vgl. Abbildung 6a) sind solche Verfahren daher nicht einsetzbar.

Aufgabenstellung ist es deshalb insoweit, einen neues Verfahren zur Identifikation reziprok verkoppelter Systeme zur Verfügung zu stellen, wobei Ein- und Ausgangssignal jeweils nicht direkt beobachtbar sind, sondern nur die Summe aus dem Ausgangssignal und einem wesentlich stärkeren, störenden Eingangssignal messtechnisch erfasst werden kann.

Erfindungsgemäß wird die Schätzung der Impulsantwort

$$\bar{h}_N = \left[h_N[0], h_N[1], \ldots, h_N[q]\right]^{\mathrm{T}}$$

$((\cdot)^{\mathrm{T}}$ bezeichnet die Transposition) des reziprok verkoppelten Systems anhand der Methode minimaler mittlerer quadratischer Fehler (minimum mean squared error, MMSE) vorgenommen. Der geschätzte Vektor von Koeffizienten der Impulsantwort (Ergebnisvektor des Schätzverfahrens) wird nachfolgend mit

$$\bar{h} = \left[h[0], h[1], \ldots, h[q]\right]^{\mathrm{T}}$$

bezeichnet. Im Falle idealer Schätzung sind also $\bar{h}_N$ und $\bar{h}$ identisch. Dabei werden alle beteiligten Zufallsprozesse $x[k]$ und $y[k]$, und damit auch $u[k]$ und $v[k]$, als schwach stationär und reellwertig vorausgesetzt. Die Anregungssignale $u[k]$

und *v*[*k*] werden zunächst als unkorreliert angenommen (vgl. hierzu aber später). Korrelationen zwischen den Signalen *x*[*k*] und *y*[*k*], die durch die das Nebensprechen bewirkende Systemverkopplungen hervorgerufen werden, werden ausgenutzt, um das System zu identifizieren.

Für die Schätzung der Impulsantwort werden die Autokorrelationsfunktionen $\phi_{xx}[\kappa]$ und $\phi_{yy}[\kappa]$ (jeweils für $0 \leq \kappa \leq 2q$) sowie die Kreuzkorrelationsfunktion $\phi_{yx}[\kappa]$ (jeweils für $-q \leq \kappa \leq q$) der Signale *x*[*k*] und *y*[*k*] benötigt. Aus der Autokorrelationsfunktion $\phi_{xx}[\kappa]$ wird die Töplitz-Matrix

$$\Phi_{xx} = \begin{bmatrix} \phi_{xx}[0] & \phi_{xx}[1] & \cdots & \phi_{xx}[q] \\ \phi_{xx}[1] & \phi_{xx}[0] & & \phi_{xx}[q-1] \\ \vdots & & \ddots & \vdots \\ \phi_{xx}[q] & \phi_{xx}[q-1] & \cdots & \phi_{xx}[0] \end{bmatrix}$$

sowie die Hankel-Matrix

$$\widetilde{\Phi}_{xx} = \begin{bmatrix} \phi_{xx}[0] & \phi_{xx}[1] & \cdots & \phi_{xx}[q] \\ \phi_{xx}[1] & \phi_{xx}[2] & & \phi_{xx}[q+1] \\ \vdots & & \ddots & \vdots \\ \phi_{xx}[q] & \phi_{xx}[q+1] & \cdots & \phi_{xx}[2q] \end{bmatrix}$$

(und in analoger Weise $\Phi_{yy}$ und $\widetilde{\Phi}_{yy}$ aus $\phi_{yy}[\kappa]$) sowie der Kreuzkorrelationsvektor $\phi_{yx} = [\phi_{yx}[0],\phi_{yx}[1],...,\phi_{yx}[q]]^{\mathsf{T}}$ (und in analoger Weise $\bar{\phi}_{xy}$ aus $\phi_{xy}[\kappa]$) gebildet. Ein MMSE-Ansatz liefert folgende Schätzung der Impulsantwort des verkoppelten Systems:

$$\vec{h} = \left(\Phi_{xx} + \Phi_{yy} + \widetilde{\Phi}_{xx} + \widetilde{\Phi}_{yy}\right)^{-1}\left(\vec{\phi}_{xy} + \vec{\phi}_{yx}\right)$$

$((\cdot)^{-1}$ bedeutet Matrixinversion).

Zur Schätzung der Nebensprechimpulsantwort muss also jeweils eine *q* x *q* Matrix invertiert werden. Um die Komplexität dieser Matrixinversion zu reduzieren, kann man in einer Näherungslösung die beiden Hankel-Matrizen vernachlässigen und erhält dann:

$$\vec{h}_{N\ddot{a}herung} = \left(\Phi_{xx} + \Phi_{yy}\right)^{-1}\left(\vec{\phi}_{xy} + \vec{\phi}_{yx}\right)$$

In dieser Näherungslösung ist nur die Summe zweier TöplitzMatrizen, die wiederum eine Töplitz-Matrix darstellt, zu invertieren. Dafür existieren effiziente, gut skalierende Verfahren.

Im Falle einer reziproken Verkopplung von mehr als zwei Systemen, z.B. bei der Übertragung über vielpaarige symmetrische Kabel, kann das Verfahren mehrfach zur Identifikation aller reziprok verkoppelten 2er-Systeme angewandt werden.

In der Praxis können die Auto- und Kreuzkorrelationsfunktionen durch Schätzwerte, die man aus Mittelwertbildungen über der Zeit erhält, ersetzt werden.

Das Verfahren zur Filteradaption besteht also aus den folgenden Schritten:

a) Schätzung der Autokorrelationsfunktionen (für Verzögerungen 0, 1, ..., 2$q$) und Kreuzkorrelationsfunktionen (für Verzögerungen -$q$, ..., -1, 0, 1, ..., $q$) der Signale auf den beiden Doppeladern während eines festen Zeitintervalls.
b) Anordnung der geschätzten Korrelationswerte in die entsprechenden Hankel- und Töplitzmatrizen.
c) Berechnung der (näherungsweisen) Nebensprechimpulsantwort.

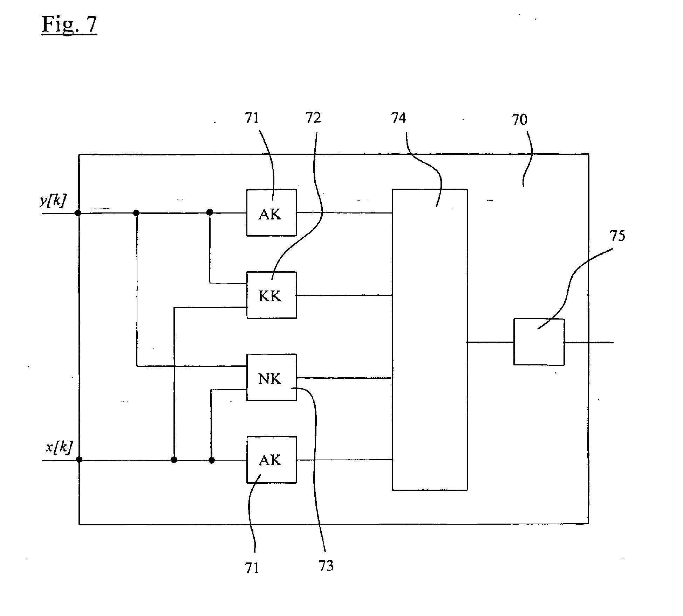

Fig. 7 zeigt eine Ermittlungseinrichtung 70, die die oben beschriebenen Verfahrensschritte und Vorgänge implementieren kann. Bei abgeschalteter Kompensation empfängt die Ermittlungseinrichtung 70 die Signale y[k] und x [k] von den Leitungen 1 und 1' und ermittelt aus ihnen eine Störkenngröße 75, die beispielsweise die Impulsantwort h (t) im Zeitbereich oder die Übertragungsfunktion H(f) im Frequenzbereich (jeweils zeitkontinuierlich oder zeitdiskret abgetastet) sein und parametrisiert beschrieben werden kann. Insbesondere schätzt die Ermittlungseinrichtung 70 die Kreuzkorrelation der Signale x[k] und y[k] und schätzt ebenso deren Autokorrelationen. Aus diesen Korrelationen wird die Impulsantwort ermittelt, vorzugsweise unter Zuhilfenahme der oben erwähnten Töplitz-Matrix und der Hankel-Matrix. Mit der so gewonnenen Nebensprech-Impulsantwort (Zeitbereich) bzw. NebensprechÜbertragungsfunktion (Frequenzbereich) können Parameter der Kompensationssteuerung bzw. des adaptiven Filters wie weiter oben beschrieben ermittelt und dann dort zur Durchführung der Kompensation eingestellt werden.

Mit diesem Ansatz ist eine relativ schnelle Abschätzung der für die Adaption notwendigen Parameter möglich. Es kann ausreichend sein, das System aus nebensprechender Leitung und zu kompensierender Leitung nur kurze Zeit (weniger als 15 Minuten, vorzugsweise weniger als 10 Minuten) zu beobachten, um daraus in der beschriebenen Weise die Adaptionsparameter herzuleiten.

Das beschriebene Verfahren setzt voraus, dass es zwischen nebensprechender Leitung und zu kompensierender Leitung keine systematisch bedingten Korrelationen gibt, dass also jedwede vorhandene Korrelation auf Nebensprechen zurückzuführen ist. Diese Annahme ist aber nicht immer richtig, denn teilweise verwenden Leitungen z. B. Pilottöne oder Steuersignale mit gleichen Charakteristika, so dass zwar der Informationsfluss der Leitungen unkorreliert ist, aber neben der Korrelation wegen des Nebensprechens auch Korrelation wegen gleicher Steuersignale wie etwa Pilotton auftritt. Im eben beschriebenen Verfahren zur Ermittlung der Störkenngröße würden solche systematisch bedingten Korrelationen (nachfolgend "Nutzkorrelation" genannt) dazu führen, dass diese Nutzkorrelationen als Nebensprechen fehldetektiert werden und würden zu einer falschen Filteradaption führen, nämlich zur Eliminierung der Nutzkorrelatiohn. Um dies zu vermeiden, kann es vorgesehen sein, die Signale y[k] und x[k] auf erwartete Nutzkorrelationen hin zu überprüfen und diese, wenn sie gefunden werden, bei der Ermittlung der Korrelation wegen Nebensprechens unberücksichtigt zu lassen. Nachfolgend wird hierzu eine Ausführungsform beschrieben.

In der Praxis kommen in der ADSL-Übertragung Pilottöne zum Einsatz, die zur Synchronisation zwischen DSLAM und Modem verwendet werden. Bei einem Pilotton handelt es sich um einen unmodulierten Sinuston fester Frequenz (414 kHz), der in jedem ADSL-Signal enthalten sein müss. Daher sind zwei verschiedene ADSL-Signale in jedem Fall korreliert, selbst wenn sie völlig nebensprechfrei sind. In dieser Situation versagt das bisher beschriebene Verfahren, da der Sinuston als nebensprechbedingte Korrelation interpretiert würde.

Ein monofrequenter Pilotton, der in zwei Signalen enthalten ist, führt in deren Kreuzkorrelationsfunktion zu einer monofrequenten Störung derselben Frequenz. Je nach Anzahl der Verschiebungen in der geschätzten Kreuzkorrelationsfunktion (Parameter $q$ weiter oben) und je nach Frequenz des Pilottons können nur wenige Perioden der Störung in der geschätzten Kreuzkorrelationsfunktion enthalten sein.

Aufgabenstellung ist es, aus der geschätzten Kreuzkorrelationsfunktion, Amplitude und Phase des Pilottons so genau zu schätzen, dass die monofrequente Störung der Kreuzkorrelation subtrahiert werden kann und zu einer vernachlässigbaren Reststörung führt. Vorausgesetzt wird hierbei, dass die Frequenz $f_P$ des Pilottons entweder aus der Kenntnis der verwendeten Übertragungssysteme oder aus einer separaten Schätzung bekannt ist.

Es ist ein Verfahren zur Schätzung der Phase eines sinusförmigen Signals bekannt. Die vorliegende Aufgabenstellung verlangt jedoch die kombinierte Schätzung von Amplitude und Phase eines sinusförmigen Signals bekannter Frequenz. Erfindungsgemäß kommt zur Entfernung der monofrequenten Störung aus der geschätzten Kreuzkorrelationsfunktion eine kombinierte Amplituden- und Phasenschätzung zum Einsatz. Da die Leistung der Störung typischerweise größer als die des Nutzanteils ist, wird die Störung geschätzt und von der geschätzten Kreuzkorrelationsfunktion subtrahiert, um den interessierenden Nutzanteil zu erhalten. Für die Schätzung der monofrequenten Störung wirkt der Nutzanteil als eigentliche Störung. Der Nutzanteil, d.h. die durch Nebensprechen erzeugten Korrelationen, wird als weißes, Gaußsches Rauschen modelliert. Zur Schätzung von Amplitude und Phase kommt erfindungsgemäß ein Maximum-Likelihood (ML) Schätzer zum Einsatz.

Die geschätzte Kreuzkorrelationsfunktion enthält die monofrequente Störung mit unbekannter Amplitude $A$ und unbekannter Phase $\varphi$, die durch den synchronen Piloten hervorgerufen wird, sowie die tatsächliche Kreuzkorrelationsfunktion:

$$\hat{\phi}[\kappa] = A \cdot \cos(2\pi f_P \kappa T_A + \varphi) + \phi[\kappa]$$

Ein Messrauschen aufgrund von unzureichend langer Mittelung wird hier insofern berücksichtigt, als $\phi[\kappa]$ ohnehin als weißes, Gaußsches Rauschen modelliert wird. Der Zeitabstand zwischen zwei zeitdiskreten Signalwerten wird hier wieder mit $T_A$ bezeichnet.

Durch die Modellierung als weißes, Gaußsches Rauschen mit Varianz $\sigma_n^2$ erhält man für die auf Amplitude und Phase bedingte Wahrscheinlichkeitsdichtefunktion des Vektors $\bar{\phi} = [\phi[0],\phi[1],...,\phi[q]]^T$ :

$$f_{\bar{\phi}}(\bar{\phi} \mid A,\varphi) = \left(\frac{1}{\sqrt{2\pi}\,\sigma_n}\right)^{q+1} \cdot e^{-\frac{\sum_{\kappa=0}^{q}[\phi[\kappa]-A\cdot\cos(2\pi f_P \kappa T_A + \hat{\varphi})]^2}{2\sigma_n^2}}$$

Die Herleitung eines ML-Schätzers führt auf ein Gleichungssystem zur Bestimmung der Schätzwerte $A$ und $\hat{\Phi}$. Das Gleichungssystem kann insofern gelöst werden, dass für $\hat{\phi}$ eine implizite Gleichung aufgestellt werden kann:

$$\sum_{\kappa=0}^{q}\phi[\kappa]\sin(2\pi f_P \kappa T_A + \hat{\varphi}) - \frac{\sum_{\kappa=0}^{q}\phi[\kappa]\cos(2\pi f_P \kappa T_A + \hat{\varphi})}{\sum_{\kappa=0}^{q}1 + \cos(2\pi f_P \kappa T_A + 2\hat{\varphi})} \cdot \sum_{\kappa=0}^{q}\sin(2\pi 2 f_P \kappa T_A + 2\hat{\varphi}) = 0$$

Diese implizite Gleichung kann z.B. mittels des Newton- oder Sekantenverfahren numerisch gelöst werden.
Mit dem erhaltenen Schätzwert für die Phase ergibt sich der folgende Amplitudenschätzwert:

$$\hat{A} = 2\frac{\sum_{\kappa=0}^{q}\phi[\kappa]\cos(2\pi f_P \kappa T_A + \hat{\varphi})}{\sum_{\kappa=0}^{q}1 + \cos(2\pi 2 f_P \kappa T_A + 2\hat{\varphi})}$$

Damit ist die monofrequente Störung nach Betrag und Phase bekannt und kann von der geschätzten Kreuzkorrelationsfunktion subtrahiert werden. Es verbleiben - unter der Voraussetzung, dass die Sendesignale bis auf die Pilottöne unkorreliert sind - nur die auf Nebensprechen zurückzuführenden Anteile der Kreuzkorrelationsfunktion. Mit dieser korrigierten Schätzung der Kreuzkorrelationsfunktion kann das Verfahren wie vorher beschrieben sinngemäß eingesetzt werden.
Die Ermittlungseinrichtung 70 der Fig. 7 weist zur Durchführung dieses Aspekts neben zwei Autokorrelierern 71 und dem Kreuzkorrelierer 72 eine Einrichtung 73 zum Ermitteln der Nutzkorrelation auf. Es kann sich bei ihr um eine Einrichtung handeln, die nach einer Nutzkorrelation nach Maßgabe vorbekannter Daten oder Parameter sucht. Vorbekannt kann beispielsweise sein, dass die Nutzkorrelation ein periodisches Signal einer bestimmten Frequenz und/oder Wellenform ist. Es wird dann nach einem solchen Signal gesucht. Wenn es gefunden wird, kann es in der Weise berücksichtigt werden, dass es aus der ansonsten ermittelten Kreuzkorrelation herausgerechnet wird, sodass die verbleibende Kreuzkorrelation tatsächlich diejenige ist, die nur auf Nebensprechen und nicht auf wie auch immer geartete Nutzkorrelation zurückzuführen ist.

Die Korrelationen aus den Einrichtungen 71 bis 73 laufen in eine Einheit 74, die, wie schon beschrieben, diese weiterverarbeiten, um zuletzt die Nebensprech-Impulsantwort (Zeitbereich) bzw. Nebensprech-Übertragungsfunktion (Frequenzbereich) vorzugsweise als zeitdiskrete Daten (Stützstellen im Zeitbereich bzw. im Frequenzbereich) zu ermitteln. Diese sind als Kästchen 75 zur Symbolisierung der Störkenngröße symbolisiert.

Fig. 6b zeigt den Signalfluss schematisch bei laufender Kompensation. Hier sind die Signale y[k], x[k], Ky[k] und Kx[k] beobachtbar. Wenn ein reziprok verkoppeltes System ohne Nebensprechkompensation (Fig. 6a) analysiert und adaptiert wurde, kann das Nebensprechen kompensiert werden, indem ein zum Nebensprechen inverses Signal Ky[k] und Kx[k] aufgeschaltet wird. Da danach, also bei laufender Kompensation, wie vorher beschrieben die Systemidentifikation (Nebensprechidentifikation) nötigenfalls bei sehr niedrigen Störabständen (≤ -40 dB) erfolgt, ist eine sehr lange zeitliche Mittelung erforderlich, um brauchbare Schätzwerten für die Kreuzkorrelationsfunktionen zu erhalten. Für den praktischen Einsatz bedeutet dies eine sehr lange Verzögerungszeit, bis das Kompensationssystem eingeschaltet werden kann.

Ferner ist nach Inbetriebnahme des Kompensationssystems eine weitere direkte Systemidentifikation ohne Kompensation nicht mehr möglich, da nun nur noch das kompensierte System beobachtet werden kann, denn im Betrieb kann die Kompensation nicht einfach abgeschaltet werden. Sollten also die Nebensprechimpulsantworten sich zeitlich langsam verändern, z.B. aufgrund der Alterung der Fernmeldekabel oder aufgrund von veränderten Umgebungsbedingungen, so ist eine Nachführung des Kompensationssystems mit dem bisher beschriebenen Verfahren nicht möglich. Es wäre erforderlich, das Kompensationssystem zunächst vollständig abzuschalten, erneut über einen Zeitraum die Kreuzkorrelationsfunktionen zu schätzen, und dann das neu adaptierte Kompensationssystem zuzuschalten.

Dieses Vorgehen ist aber nicht praxistauglich. Eine weitere Aufgabenstellung ist es daher, ein Verfahren zur Verfügung zu stellen, bei dem das Kompensationssystem über einen längeren Zeitraum stets nachgeführt werden kann. Damit ist es zum einen möglich, langsamen Veränderungen der Nebensprechimpulsantwort zu folgen, zum anderen wird es möglich, Fehler bei der Schätzung der Nebensprechimpulsantworten - zum Beispiel aufgrund von zu kurzer zeitlicher Mittelung - nach und nach zu "heilen".

Das erfindungsgemäße Verfahren beruht auf einer wiederholten blockweisen Verarbeitung, bei der einzelne, zeitlich nacheinander auftretende Informationsblöcke analysiert werden. Die zeitliche Länge dieser Blöcke kann länger als 100 Millisekunden, vorzugsweise länger 500 ms, und/oder kürzer als 30 Sekunden, vorzugsweise kürzer 10 Sekunden sein. Die Länge kann zwischen 1 und 4 Sekunden liegen.

Dabei wird jeweils eine feste Zahl an Abtastwerten $x[k]$ und $y[k]$ aus dem jeweiligen Block verarbeitet, um die Korrelationsfunktionen im Block $i$ zu schätzen. Nachdem das Kompensationssystem eingeschaltet wurde, beinhaltet die Schätzung $\hat{\phi}_{yx}^{(i)}[\kappa]$ der Kreuzkorrelationsfunktion für den Block $i$ die Wirkung des im Block $i$ aktiv gewesenen Kompensationssystems mit der Impulsantwort $h^{(i)}[k]$. Um die Systemidentifikation nach dem Verfahren ohne Kompensation durchführen zu können, ist jedoch eine Schätzung der Kreuzkorrelationsfunktion notwendig, die gemessen worden wäre, wenn keine Kompensation statt gefunden hätte. Unter Ausnutzung kleinerer Näherungen lässt sich die Schätzung der Kreuzkorrelationsfunktionen mit aktiver Kompensation auf den hypothetischen Fall ohne Kompensation umrechnen:

$$\hat{\phi}_{yx,unkomp.}^{(i)}[\kappa] = \hat{\phi}_{yx}^{(i)}[\kappa] + h^{(i)}[\kappa] * \hat{\phi}_{xx}^{(i)}[\kappa] + h^{(i)}[-\kappa] * \hat{\phi}_{yy}^{(i)}[\kappa]$$

(Das Symbol * bezeichnet die lineare Faltung.) Da bei schwachem Nebensprechen die Kompensation auf die Autokorrelationsfunktionen von $x[k]$ und $y[k]$ keinen nennenswerten Einfluss hat, müssen die entsprechenden Schätzwerte nicht umgerechnet werden. Damit kann das Verfahren nach Abschnitt 5 unverändert zum Einsatz kommen, wenn anstelle $\phi_{\overline{xx}}[\kappa]$ bzw. $\phi_{yy}[\kappa]$ die Schätzwerte $\hat{\phi}_{xx}^{(i)}[\kappa]$ bzw. des aktuellen Blocks $i$ und anstelle von $\phi_{yx}[\kappa]$ bzw. $\phi_{xy}[\kappa]$ die umgerechneten Schätzwerte $\hat{\phi}_{yx,unkomp.}^{(i)}[\kappa]$ bzw. $\hat{\phi}_{xy,unkomp.}^{(i)}[\kappa]$ verwendet werden.

Für eine langfristige Verbesserung der Schätzung der Korrelationsfunktionen müssen neben den Schätzwerten aus dem aktuellen Block auch die Schätzwerte früherer Blöcke berücksichtigt werden. Dies wird mit einer Mittelung der Schätzwerte der einzelnen Blöcke mit einem gleitenden Fenster erreicht. Als Fensterfunktion kann z.B. ein Rechteck-Fenster oder vorteilhaft ein exponentiell gewichtetes Fenster verwendet werden. Bei letzterem lassen sich die gemittelten Schätzwerte in rekursiver Weise berechnen:

$$\overline{\hat{\phi}}_{xx}^{(i)}[\kappa] = (1-\alpha)\overline{\hat{\phi}}_{xx}^{(i-1)}[\kappa] + \alpha\hat{\phi}_{xx}^{(i)}[\kappa]$$

$$\overline{\hat{\phi}}_{xx}^{(i)}[\kappa] = (1-\alpha)\overline{\hat{\phi}}_{xx}^{(i-1)}[\kappa] + \alpha\hat{\phi}_{xx}^{(i)}[\kappa]$$

$$\overline{\hat{\phi}}_{yx,unkomp.}^{(i)}[\kappa] = (1-\alpha)\overline{\hat{\phi}}_{yx,unkomp.}^{(i-1)}[\kappa] + \alpha\hat{\phi}_{yx,unkomp.}^{(i)}[\kappa]$$

Der Parameter $0 < \alpha < 1$ bestimmt dabei die effektive Fensterlänge. Je größer die effektive Fensterlänge, desto besser werden die Schätzwerte der Korrelationsfunktionen mit deren selbst übereinstimmen. Jedoch nimmt die Fähigkeit, möglichen Änderungen der Nebensprechübertragungsfunktion über der Zeit zu folgen, mit steigender Fensterlänge ab.

Mit den gemittelten Schätzwerten kann das vorher beschriebene Verfahren unverändert zum Einsatz kommen, indem anstelle $\phi_{xx}[\kappa]$ bzw. $\phi_{yy}[\kappa]$ die gemittelten Schätzwerte bzw. $\overline{\hat{\phi}}_{yy}^{(i)}[\kappa]$ und anstelle von $\phi_{yx}[\kappa]$ bzw. $\phi_{xy}[\kappa]$ die gemittelten umgerechneten Schätzwerte $\overline{\hat{\phi}}_{yx,unkomp.}^{(i)}[\kappa]$ bzw. $\overline{\hat{\phi}}_{xy,unkomp.}^{(i)}[\kappa]$ verwendet werden.

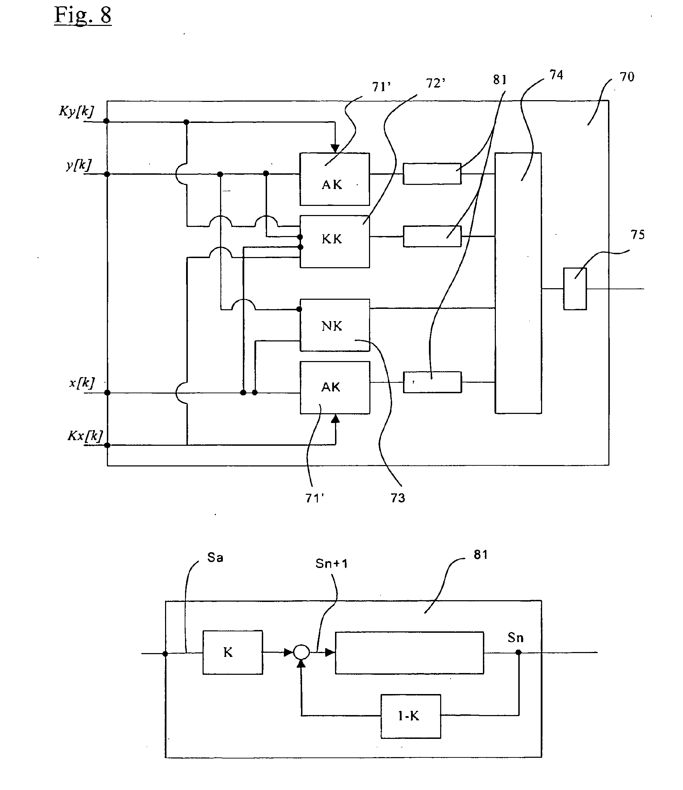

Das beschriebene Verfahren führt also dazu, dass bei laufender Kompensation die Störkenngrößen-Ermittlungseinrichtung 70 die Kreuzkorrelation zwischen dem ersten Signal y[k] und dem Nebensprechsignal x[k] bzw. die Autokorrelationen dieser Signale unter Berücksichtigung des Kompensationssignals abschätzt und die so gewonnenen geschätzten Korrelationen wie vorher beschrieben weiterverwendet. Hierzu kann, wie in Fig. 8 schematisch gezeigt, die Ermittlungseinrichtung 70 Eingänge für die Korrektursignale Ky[k] und Kx[k] aufweisen, die in den Autokorrelierern 71 und im Kreuzkorrelierer 72 berücksichtigt werden.

Fig. 8 zeigt weiterhin qualitativ Einrichtungen 81, die das langsames Nachführen gegebenenfalls gewonnener neuer Schätzwerte und damit einen stetigen Verlauf sicherstellen. Für die entstehenden Schätzwerte der Matrizen werden autoregressive Durchschnitte gebildet, indem der neue Schätzwert mit einem Faktor k zwischen 0 und 1 multipliziert und zum mit 1-k multiplizierten, bisherigen Schätzwert addiert wird. Auf diese Weise gehen neu gewonnene Schätzwerte nur allmählich, nicht sprunghaft in die Ermittlung der Nebensprech-Impulsantwort als Störkenngröße 75 ein. Es kann so wegen beispielsweise Fehlerfassungen nicht zu groben Systemverstimmungen und damit dem "Davonlaufen" des Systems kommen. Bei der Langzeitadaption ist weiterhin vorteilhaft, dass sich Ungenauigkeiten und Bauteiltoleranzen teilweise über den Zeitverlauf selbst "heilen" bzw. korrigieren. Das gilt z.B. dann, wenn die Messzweige der einzelnen Aderpaare nicht ganz identisch sind (z.B. leicht unterschiedliche Anti-Alias-Filter durch Bauteiltoleranzen). Es gilt z.B. auch dann, wenn sich der analoge Zweig des Kompensationsfilters nicht exakt so verhält wie angenommen.

Die Adaption kann also insgesamt in der Weise geschehen, dass anfänglich die Störkenngröße bei ausgeschalteter Kompensation bzw. Filterung ermittelt wird (Figuren 6a und 7 und Beschreibung) und diese danach nötigenfalls bei zugeschalteter Kompensation nachgeführt wird (Figuren 6b und 8 und Beschreibung).

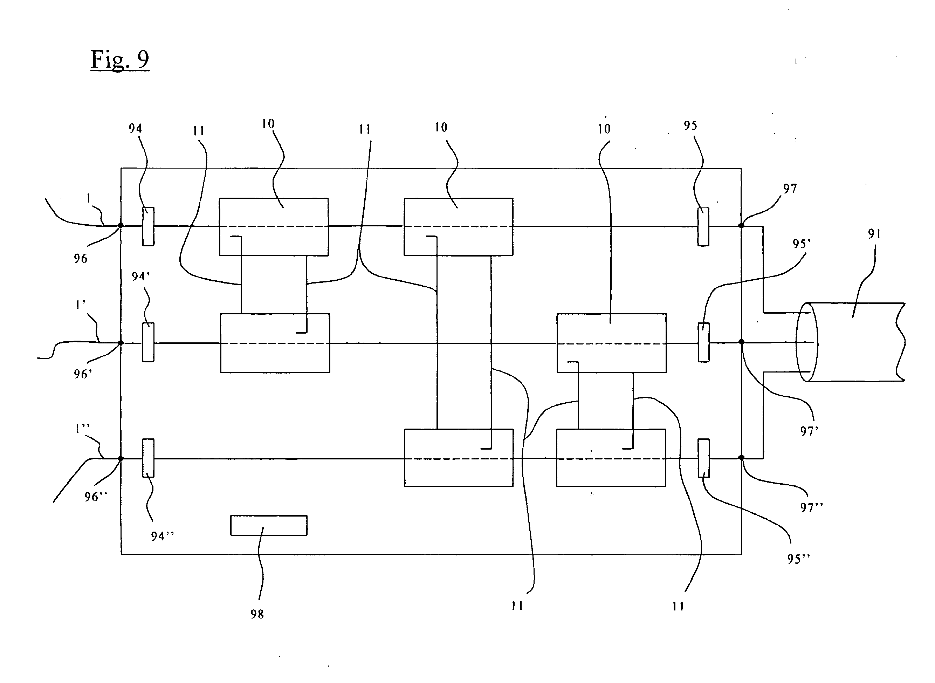

Bisher wurden verschiedenen Ausführungsformen einer Kompensationsschaltung für eine Signalleitung beschrieben. Es können aber auch mehrere Kompensationsschaltungen 10 für mehrere Signalleitungen 1, 1', 1", ... vorgesehen sein, wie dies in Fig. 9 schematisch gezeigt ist. Fig. 9 zeigt schematisch eine Kompensationseinheit 90 für mehrere Signalleitungen, im gezeigten Beispiel drei Leitungen. Es können aber auch zwei, vier oder mehr Leitungen sein. Wenn jeder der n Signalleitungen 1 gegen jede andere Signalleitung nebensprechkompensiert werden soll, sind n*(n-1) Kompensationsschaltungen notwendig. Fig. 9 zeigt dementsprechend für drei zu kompensierende Signalleitungen sechs Kompensationsschaltung 10 mit jeweils einem Störsignaleingang 11, wobei dieser das Signal auf einer benachbarten Datenleitung abgreift. Jede der Kompensationsschaltungen 10 kann wie bisher beschrieben aufgebaut sein.

Soweit Totzeitglieder vorgesehen sind, erfolgt der Abgriff des nebensprechenden Signals durch den Störsignaleingang 11 vorzugsweise so, dass zwischen dem Abgriff und jeder nach außen abgehenden Leitung mindestens ein Totzeitglied liegt. Anstelle von Totzeitgliedern in den einzelnen Kompensationsschaltungen 10 oder zusätzlich hierzu können auch Totzeitglieder 94, 95 über das unmittelbar vor dem Ausgang der Kompensationseinheit 90 zu den abgehenden Leitungen liegen.

Fig. 9 zeigt eine Ausführungsform, bei der für jede paarweise vorzunehmende Kompensation eine eigene Kompensationsschaltung 10 vorgesehen ist. Es ist aber auch möglich, eingangsseitig, also bei den Störsignaleingängen 11, die Störsignale zusammenzufassen, sodass pro Leitung nur eine einzige Kompensationsschaltung 10 notwendig ist, diese jedoch mit einem modifizierten Störsignaleingang dahingehend zu versehen ist, dass dort die Störsignale von mehreren benachbarten Leitungen her zusammengefasst werden. Wenn nur eine Kompensationsschaltung 10 pro

**EP 1 775 851 B1**

Leitung vorgesehen ist, kann auch die Erzeugung des Kompensationssteuerungssignals noch getrennt nach den einzelnen Leitungspaarungen entsprechend den dort jeweils geltenden Verkopplungen (Impulsantwort bzw. Übertragungsfunktion) erfolgen, sodass danach die Steuersignale aus den einzelnen Paarungen zu einem gemeinsamen Steuerungssignal für eine gemeinsame gesteuerte Stromquelle zusammengefasst werden.

Die Kompensationseinheit 90kann als Baueinheit vorgesehen sein und dementsprechend Anschlüsse 96 und 97 zum beidseitigen Anschluss der Signalleitungen aufweisen. Die Signalleitungen 1 können bidirektional und auf einer oder auf beiden Seiten der Schaltung 10 bzw. Einheit 90 Teil eines Kabelbündels 91 sein.

98 symbolisiert eine zentrale Steuerung der Einheit 90 bzw. einer einzelnen Schaltung 10. Sie kann Steuerungen wie Übergang von Kurzzeit- auf Langzeitadaption und ähnliches steuern. Die zentrale Steuerung 98 kann auch das Abschalten und Zuschalten von Kompensationsschaltungen bzw. adaptiven Filtern steuern.

Nebensprechkompensation kann auch für von extern stammende Störsignale erfolgen. Hierfür wäre eine geeignet ausgelegte Störsignalaufnahme 11 vorzusehen. Die Signalleitung 1 und auch die mehreren Signalleitungen 1, 1', 1", ... eines Kabelbündels 91 können jeweils Adernpaare sein.

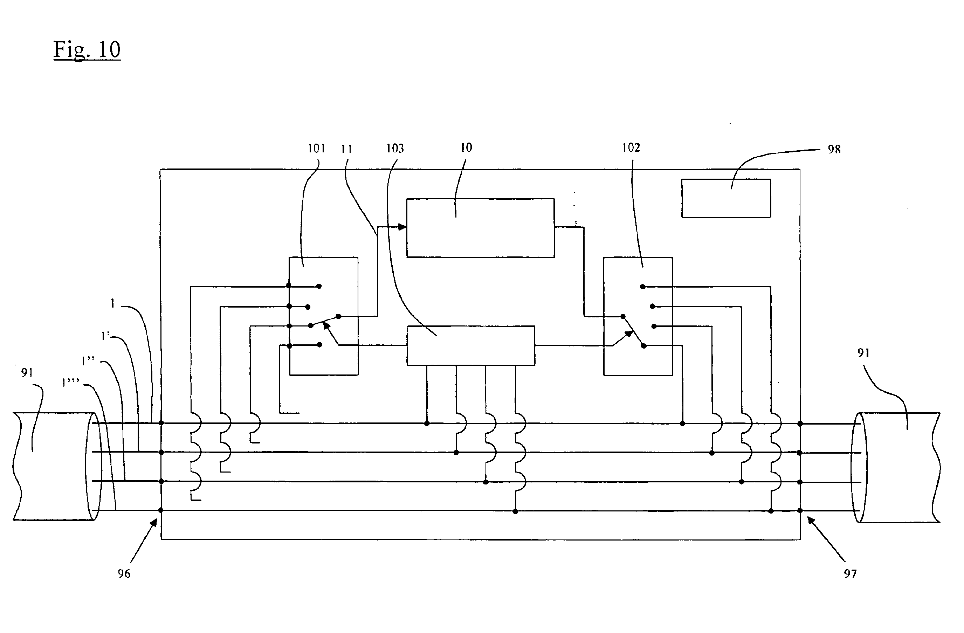

Fig. 10 zeigt eine weitere Ausführungsform der beschriebenen Kompensationseinheit 90 für mehrere Signalleitungen 1, 1', 1", ... Diese Ausführungsform ist auch mit herkömmlichen Kompensationsschaltungen verwendbar, also solchen, bei denen ein serielles Kompensationssignal aus einer gesteuerten Spannungsquelle in die Signalleitung zur Kompensation des Nebensprechens eingespeist wird. Ziel der Ausführungsform der Fig. 10 ist es, den Schaltungsaufwand für eine gute Nebensprechkompensation zu reduzieren. Es hat sich herausgestellt, dass nicht alle Leitungen gleich stark gegeneinander Nebensprechen bewirken. Das Ausmaß der Störanfälligkeit gegen Nebensprechen hängt einerseits von den Leitungen selbst ab, andererseits aber auch von den Signalen/Diensten, die über die jeweiligen Leitungen laufen. Diese können wählbar sein und sich im Laufe der Zeit ändern.

Bei den auf den Leitungen laufenden Signalen bzw. Diensten gibt es solche, die vergleichsweise robuste Signale haben, die also gegen Nebensprechen unempfindlich sind, und es gibt auch solche, die wegen der Natur der auf ihnen geführten Signale Nebensprechen nur sehr schwach bewirken. Dementsprechend ist es häufig nicht notwendig, alle Leitungen eines Kabelbündels 91 maximal gegeneinander zu kompensieren. Vielmehr kann es ausreichend sein, nur eine kleinere als die maximal nötige Zahl von Kompensationsschaltungen 10 vorzusehen und deren Störsignaleingang 11 wie auch Kompensationssignalausgang entsprechend den tatsächlichen Notwendigkeiten zuzuordnen. Tatsächlich gibt es eine große Anzahl von Konstellationen, bei denen Nebensprechen gar keine Rolle spielt: So beeinflussen sich etwa analoge Sprachdienste und xDSL-Dienste gegenseitig nur gering. Auch in einem reinen ADSL-Umfeld ist Nebensprechen vernachlässigbar, da Nahnebensprechen durch ein Frequenzgetrenntlageverfahren (FDD) verhindert wird. Andere Konstellationen sind dagegen sehr empfindlich gegenüber Nahnebensprechen, so z.B. E1/T1-Dienste im Zusammenspiel mit ADSL oder auch SDSL im Zusammenspiel mit ADSL. Dies bedeutet, dass bei vollständiger Kompensation der überwiegende Teil der vorhandenen Kompensationsfilter überflüssig ist. Damit wäre die Hardware unnötig komplex und teuer. Weiterhin erzeugt die große Anzahl sehr schnell laufender Kompensationsfilter eine hohe Verlustleitung, welche die Kühlung der Kompensationseinrichtungen problematisch macht.

Dementsprechend kann eine Klassifikationseinheit 103 vorgesehen sein, die die Signale auf den Leitungen beobachtet, diese entsprechend ihres Störvermögens und/oder ihrer Störbarkeit klassifiziert und dann die Zuordnung von Kompensationsschaltungen steuert. Es kann auf jedem Aderpaar anhand einer spektralen Klassifikation bestimmt werden, welches Übertragungsverfahren auf dem jeweiligen Aderpaar benutzt wird.

Nach Maßgabe des Klassifikationsergebnisses kann einerseits der Störsignaleingang 11 auf eine bestimmte der Signalleitungen 1 aufgeschaltet werden, und es kann andererseits der Kompensationssignalausgang auf eine bestimmte der Signalleitungen 1 geschaltet werden. Dies kann jeweils durch Schalter 101 und 102 erfolgen, wie sie in Fig. 10 schematisch dargestellt sind. Die verfügbaren Kompensationsfilter werden dann also dynamisch den jeweils kritischsten Konstellationen zugeteilt, z.B. SDSL<->ADSL oder E1/T1<->ADSL Paarungen

Soweit die Kompensation auf der digitalen Seite erfolgt, wird eine hardwareseitige Umschaltung womöglich nicht notwendig sein, sie kann durch geeignete digitale Steuerung bzw. Vornahme oder Nichtvornahme von Kompensationsschritten erfolgen.

Die Klassifikationseinheit kann auf bestehende Zwischenergebnisse zurückgreifen, insbesondere die Autokorrelationsfunktionen wie schon beschrieben, um zusätzlichen Hardwareaufwand für die erforderliche spektrale Klassifikation zu vermeiden. Vorteilhaft werden die geschätzten Werte $\phi_{xx}[\kappa]$ der Autokorrelationsfunktionen der Leitungssignale verwendet. Diese Werte müssen für die Kurzzeitadaption ohnehin ermittelt werden und stehen daher ohne weiteren Aufwand zur Verfügung. Aus diesen Autokorrelationsfunktionen werden Merkmale (z.B. Lage des Maximums, Verhältnis Maximum zu Nebenwerten, etc.) extrahiert und mit abgespeicherten Referenzmerkmalen verglichen. Aus dem Vergleich ergibt sich eine Entscheidung, welches Übertragungsverfahren auf der jeweiligen Doppelader verwendet wird.

Nach dem Einschalten der Kompensationseinrichtung ergibt sich daher folgender Ablauf in der zentralen Steuerungslogik der Kompensationseinrichtung:

a) Schätzen der Autokorrelationsfunktionen der Signale auf allen Doppeladern.

**14**

b) Klassifizieren der Übertragungssysteme (ADSL, SDSL, E1/T1, ISDN, etc.) auf allen Doppeladern anhand der Autokorrelationsfunktionen.

c) Entscheidung, welche Paarungen von Übertragungssystemen bzgl. Nahnebensprechens am kritischsten sind und Zuteilung der vorhandenen Kompensationsfilter auf diese Paarungen.

d) Adaption der Filterkoeffizienten

e) Zuschalten der Kompensationsfilter.

Die Ausführungsform der Fig. 10 kann für jede der Schaltungen 10 der Einheit 90 in Fig. 9 vorgesehen sein. Die zentrale Steuerung 98 kann auch die Vornahme der Klassifikation und das Verwerten der dabei gewonnenen Ergebnisse steuern.

**Patentansprüche**

1. Kompensationsschaltung (10) zur Ermittlung und Kompensation von Störsignalen, insbesondere eines Nebensprechsignals aus einer Nebensprechquelle in einem Nachrichtenübertragungssystem mit mindestens zwei Signalleitungen (1, 1') eines Leitungsbündels (91), mit einer Kompensationseinrichtung (11 - 13), die aufweist:

   - einen Störsignaleingang (11), der nach Maßgabe der Nebensprechquelle ein Störsignal empfängt,
   - eine mit dem Störsignaleingang (11) verbundene Kompensationssteuerung (12),
   - eine mit der Kompensationssteuerung (12) verbundene Kompensationssignalquelle (13), die eine steuerbare Stromquelle aufweist und nach Maßgabe des Störsignals ein Kompensationssignal zur Beaufschlagung ein erstes Signals auf der ersten Signalleitung (1) erzeugt, indem als Kompensationssignal ein gesteuerter Kompensationsstrom (ik(t)) für die parallele Einspeisung erzeugt wird,
   - so dass ohne eine Gabelschaltung zur Trennung von Empfangs- und Senderichtung der Signale auf den Signalleitungen (1, 1') ein für mindestens Gleichstrom ununterbrochener Lauf der Signalleitungen (1, 1') bei Kompensation des Nebensprechens auf diesen Signalleitungen (1, 1') ermöglicht wird.

2. Kompensationsschaltung nach Anspruch 1, **dadurch gekennzeichnet, dass** die erste Signalleitung (1) ein Aderpaar (1a, 1b) ist und die steuerbare Stromquelle (13) zwischen die Adern des Adernpaars (1a, 1b) geschaltet ist, oder mit nur einer Ader verbunden ist, wobei eine zweite Stromquelle mit der anderen Ader des Adernpaars (1a, 1b) verbunden ist.

3. Kompensationsschaltung nach Anspruch 1 oder 2, **dadurch gekennzeichnet, dass** der Kompensationsstrom (ik(t)) nach Maßgabe eines am Stromquellenausgang wirksamen Widerstands ($Z_l$, $Z_r$) eingestellt wird.

4. Kompensationsschaltung nach Anspruch 1, **dadurch gekennzeichnet, dass** die Kompensationseinrichtung (11 - 13) ein adaptives Filter aufweist.

5. Kompensationsschaltung nach Anspruch 2, **gekennzeichnet durch** zwei Anschlüsse (16, 17) zum Einschalten der Schaltung in die erste Signalleitung (1) und eine sich zwischen den Anschlüssen (16, 17) erstreckende Durchleitung (18b) der ersten Signalleitung (1), wobei der gesteuerte Kompensationsstrom (ik(t)) parallel in die Durchleitung (18) eingespeist wird.

6. Kompensationsschaltung nach Anspruch 1, **dadurch gekennzeichnet, dass** die Kompensationssteuerung (12) einen analogen und einen digitalen Kompensationsblock (41, 42) aufweist.

7. Kompensationsschaltung nach Anspruch 6, **dadurch gekennzeichnet, dass** der der analoge und der digitale Kompensationsblock (41, 42) parallel eingespeiste Kompensationsgrößen erzeugen.

8. Kompensationsschaltung nach Anspruch 6 oder 7, **dadurch gekennzeichnet, dass** die Kompensationseinrichtung (11 - 13) mittels einer Nebensprech-Impulsantwort (33) das Kompensationssignal (ik(t)) erzeugt, wobei der analoge Kompensationsblock (41) einen ersten Teil (31) und der digitale Kompensationsblock (42) einen zweiten Teil (32) der Impulsantwort (33) nachbilden und wobei der zweite Teil (32) zeitlich später als der erste Teil (31) ist.

9. Kompensationsschaltung nach Anspruch 5, **gekennzeichnet durch** eine oder mehrere Verzögerungs-Schaltungen (14, 15) vor einem oder beiden Anschlüssen (16, 17) zur Verzögerung des ersten Signals.

10. Kompensationsschaltung nach Anspruch 9, **dadurch gekennzeichnet, dass** die Verzögerüngsschaltungen (14, 15) analog aufgebaut ist und vorzugsweise zwei serielle Induktivitäten (51) und kreuzweise zwischen ihnen verschaltet zwei Kapazitäten (52) aufweist.

11. Kompensationsschaltung nach Anspruch 5 und 9, **gekennzeichnet durch** eine Durchleitung (18b) zur Leitung des Signals zwischen den Anschlüssen(16, 17), wobei die Durchleitung (18b) mit der Verzögerungsschaltung (14, 15) verbunden ist.

12. Kompensationsschaltung nach einem der Ansprüche 1 bis 11, **dadurch gekennzeichnet, dass** die Kompensationseinrichtung (11-13) aufweist:

    - eine Störkenngrößen-Ermittlungseinrichtung (74) zum Ermitteln einer das Nebensprechen charakterisierenden Störkenngröße (75) anhand des ersten Signals und des Nebensprechsignals, und
    - eine Kompensationssignalerzeugungseinrichtung, die nach Maßgabe der Störkenngröße (75) das Kompensationssignal erzeugt.

13. Kompensationsschaltung nach Anspruch 12, **gekennzeichnet durch** eine Schalteinrichtung (19), mittels derer das Kompensationssignal der ersten Leitung (1) zugeschaltet oder von ihr abgeschaltet werden kann, und einer Steuerungseinrichtung (12), die die Schalteinrichtung (19) so steuert, dass das Kompensationssignal (ik(t)) von der ersten Leitung (1) abgeschaltet wird, wenn die Störkenngrößen-Ermittlungseinrichtung (74) die Störkenngröße zwischen dem ersten Signal und dem Nebensprechsignal ermittelt.

14. Kompensationsschaltung nach Anspruch 12 oder 13, **dadurch gekennzeichnet, dass** die Störkenngrößen-Ermittlungseinrichtung (74) die Kreuzkorrelation (72) zwischen dem ersten Signal und dem Nebensprechsignal und die Autokorrelationen (71) der Signale schätzt.

15. Kompensationsschaltung nach Anspruch 14, **dadurch gekennzeichnet, dass** die Störkenngrößen-Ermittlungseinrichtung (74) die Impulsantwort (33) des Nebensprechsystems als Störkenngröße nach Maßgabe der Kreuzkorrelation (72) und der Autokorrelation (71) schätzt.

16. Kompensationsschaltung nach einem der Ansprüche 12 bis 15, **dadurch gekennzeichnet, dass** die Kompensationseinrichtung (11 - 13) eine Nutzkorrelationsermittlungseinrichtung (73) zum Ermitteln einer Nutzkorrelation zwischen dem ersten Signal und dem Nebensprechsignal aufweist, und dass die Störkenngrößen-Ermittlungseinrichtung (74) die Kreuzkorrelation (72) zwischen dem ersten Signal und dem Nebensprechsignal unter Berücksichtigung der Nutzkorrelation (73) ermittelt.

17. Kompensationsschaltung nach Anspruch 16, **dadurch gekennzeichnet, dass** die Nutzkorrelationsermittlungseinrichtung (73) die Nutzkorrelation nach Maßgabe vorbekannter Parameter oder Informationen, insbesondere nach Maßgabe einer Annahme einer Wellenform eines korrelierenden Signalteils mit einem oder mehreren offenen Parametern, ermittelt.

18. Kompensationsschaltung nach Anspruch 15, **dadurch gekennzeichnet, dass** bei laufender Kompensation die Störkenngrößen-Ermittlungseinrichtung (74) die Kreuzkorrelation (72) zwischen dem ersten Signal und dem Nebensprechsignal und/oder die Autokorrelation (71) unter Berücksichtigung des Kompensationssignals (ik(t)) abschätzt.

19. Kompensationsschaltung nach Anspruch 18, **dadurch gekennzeichnet, dass** die Störkenngrößen-Ennittlungseinrichtung (74) die jeweiligen Korrelationen (71, 72) wiederholt Bezug nehmend auf neue Signalteile schätzt und die jeweils aktuelle Schätzung Sa mit der bisher verwendeten Schätzung Sn zu einer neu zu verwendenden Schätzungen Sn+1 der jeweiligen Korrelationen verrechnet.

20. Kompensationsschaltung nach Anspruch 19, **dadurch gekennzeichnet, dass** die Störkenngrößen-Ermittlungseinrichtung (74) die Verrechnung von aktueller Schätzung Sa mit der bisher verwendeten Schätzung Sn zur neu zu verwendenden Schätzung Sn+ 1 nach folgender Formel vornimmt:

$$Sn+1 = k * Sa + (1 -k) * Sn$$

wobei k ein Koeffizient zwischen 0 und 1 ist.

21. Kompensationseinheit (90) in einem Nachrichtenübertragungssystem mit mindestens zwei Signalleitungen (1, 1') eines Leitungsbündels (91), mit einer oder mehreren Kompensationsschaltungen (10) mit einer Kompensationseinrichtung (11 - 13), die einen Störsignaleingang (11), eine Kompensationssteuerung (12) und eine steuerbare Stromquelle (13) aufweisen, zum Kompensieren des Nebensprechens in den ersten Signalen wegen Nebensprechsignalen aus einer oder mehreren Nebensprechquellen derart, dass je eine Kompensationsschaltung (10) mit je einer ersten Leitung (1, 1') des Leitungsbündels (91) verbindbar ist, wobei ein gesteuerter Kompensationsstrom (ik (t)) für die parallele Einspeisung erzeugt und ein für mindestens Gleichstrom ununterbrochener Lauf der Signalleitungen (1, 1') bei Kompensation des Nebensprechens auf diesen Signalleitungen (1, 1') ermöglicht wird.

22. Kompensationseinheit nach Anspruch 21, **dadurch gekennzeichnet, dass** der Störsignaleingang (11) einer Kompensationseinrichtung (11 - 13) einer ersten Leitung (1, 1') mit einem Störsignal beaufschlagbar ist, welches nach Maßgabe des ersten Signals auf einer anderen ersten Leitung (1, 1') erzeugt wird.

23. Kompensationseinheit nach Anspruch 21 oder 22, **gekennzeichnet durch** eine Klassifikationseinheit (103), welche die mehreren ersten Signale auf den mehreren ersten Leitungen (1, 1') und/oder ein Nebensprechsignal nach Maßgabe ihres Störvermögens und/oder ihrer Störbarkeit klassifiziert, und eine Zuordnungseinheit (101, 102), welche die Anschlüsse und/oder den Störsignaleingang (11) einer Kompensationsschaltung (10) nach Maßgabe des Klassifizierungsergebnisses einer der ersten Leitungen (1, 1') bzw. einem Nebensprechsignal zuordnet.

24. Kompensationseinheit nach Anspruch 23 und 14, **dadurch gekennzeichnet, dass** die Klassifikationseinheit die Klassifikation anhand der geschätzten Autokorrelationen (71) vornimmt.

25. Kompensationsschaltung nach Anspruch 1, **dadurch gekennzeichnet, dass** die erste Signalleitung (1, 1') zwischen den Anschlüssen (96, 96', 96''; 97, 97', 97 ") ununterbrochen oder über ein oder mehrere Verzögerungsglieder (94, 94 ', 94 "; 95, 95', 95 ") durchgeschaltet ist, dass die erste Signalleitung (1) eine bidirektionale Signalleitung ist, dass die Nebensprechquelle eine weitere Signalleitung (1') ist, die vorzugsweise bidirektional und/oder zur ersten Signalleitung (1) benachbart ist oder eine Signalleitung (1) ein Aderpaar (1a, 1b) ist und dass die Kompensationsschaltung (10) keine Gabelschaltung aufweist.

26. Nebensprech-Kompensationsverfahren in einem Nachrichtenübertragungssystem mit mindestens zwei Signalleitungen (1, 1') eines Leitungsbündels (91), mit mindestens einer Kompensationsschaltung (10) mit einer Kompensationseinrichtung (11 - 13), die einen Störsignaleingang (11), eine Kompensationssteuerung (12) und eine steuerbare Stromquelle (13) aufweist, bei dem

• zur Kompensation des Nebensprechens in einer ersten Signalleitung wegen eines nebensprechenden Signals nach Maßgabe des nebensprechenden Signals ein Kompensationsstrom (ik(t)) erzeugt und parallel in die erste Signalleitung (1) eingespeist wird und

• ein für mindestens Gleichstrom ununterbrochener Lauf der Signalleitungen (1, 1') und ohne eine Gabelschaltung eine Kompensation des Nebensprechens auf diesen Signalleitungen (1, 1') ermöglicht wird.

**Claims**

1. Crosstalk compensation circuit (10) for detecting and cancellation of interference signals, in particular of cross-talk signals from a cross-stalking source of a communication system comprising at least two signal lines (1, 1') of a trunk group (91), with a compensation device (11-13) comprising:

- an input for interference signal (11), where such a signal is available depending from the cross-talking source;
- a compensation control (12) connected to the interference signal input (11);
- a source of a compensation signal (13) connected to said compensation control (12), comprising a controllable current source and depending on the interference signal generates a compensation signal for triggering the first signal at the first signal line (1) in which controlled compensation current (ik(t)) for parallel power supply is generated as a compensation signal,
- so that without a hybrid circuit for separating reception and transmission direction of said signals on said signal lines (1, 1') at least a continuous flow of direct current on said signal lines (1, 1') and with compensation of cross-talk on said signal lines (1, 1') is available.

2.  Compensation circuit according to claim 1, wherein said first signal line (1) is a pair of conductors (1a, 1b) and the controllable current source (13) is switched between the wires of said pair of conductors (1a, 1b) or connected with only one conductor, wherein a second current source is connected to the other conductor of the pair of conductors (1a, 1b).

3.  Compensation circuit according to claim 1 or 2, wherein said compensation current (ik(t)) is regulated according to impedance ($Z_l$, $Z_r$) acting in the electric output.

4.  Compensation circuit according to claim 1, wherein said compensation equipment (11-13) comprises an adaptive filter.

5.  Compensation circuit according to claim 2, wherein two terminals (16, 17) for switching said circuit into the first switching signal cable (1) and wherein one intermediate conductor (18b) is located between the terminals (16, 17) of the first signal cable (1), whereas the controlled compensation current (ik(t)) is fed in parallel to the intermediate conductor (18).

6.  Compensation circuit according to claim 1, wherein said compensation control (12) has analog and digital compensation unit (41, 42).

7.  Compensation circuit according to claim 6, wherein said analog and digital compensation unit (41, 42) generates in parallel compensation values.

8.  Compensation circuit according to claim 1, wherein said compensation equipment (11-13) by a crosstalk-impulse response (33) generates a compensation signal (ik(t)), wherein the analog compensation unit (41) forms the first part (31), and a digital compensation unit (42) forms the second part (32) of the impulse response (33) and wherein the second part (32) is delayed in time to the first part (31).

9.  Compensation circuit according to claim 5, **characterized by** one or more delay circuits (14, 15) are arranged in front of one or two terminals (16, 17) for delaying the first signal.

10. Compensation circuit according to claim 9, wherein said delay circuits (14, 15) are analogue composite and comprising preferably two serial inductive (51) and between them crossover two capacities (52).

11. Compensation circuit according to claim 5 and 9, wherein an intermediate conductor (18b) passes the signal between said terminals (16, 17), whereby said intermediate conductor (18b) is connected to said delay circuit (14, 15).

12. Compensation circuit according to one of claim 1 till claim 11, wherein said compensation equipment (11-13) comprises:

    - a device for detection of nominal values of interferences (74) for determining the nominal values of interferences characterizing the error signal (75) based on the first signal and said interference signal, and
    - a device for generating a compensation signal according to said error signal (75).

13. Compensation circuit according to claim 12, **characterized by** a switching means (19), for switching on and off of said compensation signal of the first cable (1), and a control equipment (12), which controls the switching means (19) so that the compensation signal (ik(t)) of the first cable (1) is turned off, if said device for interference detection (74) detects a nominal value of interference between the first signal and the secondary signal.

14. Compensation circuit according to claim 12 or 13, wherein said device for interference detection (74) estimates the cross-correlation (72) between the first signal and crosstalk signal and estimates an auto-correlation (71) of said signals.

15. Compensation circuit according to claim14, wherein said device for interference detection (74) estimates said impulse response (33) of said interference system as a nominal value of the interference according to said cross-correlation (72) and said auto-correlation (71).

16. Compensation circuit according to claim 12 till 15, wherein the compensation equipment (11-13) comprises a device for detecting an useful correlation (73) for providing a useful correlation between the first signal and the crosstalk signal and that said device for interference detection (74) detects said cross-correlation (72) between said first signal and said crosstalk signal, referencing to said useful correlation (73).

17. Compensation circuit according to claim 16, wherein the device for detection of useful correlation (73) detects the useful correlation with a view to pre-known parameters or data, in particular with a view of adopting a wave form of the correlating portion of the signal with one or several open parameters.

18. Compensation circuit according to claim 15, wherein at current compensation said device for detection of useful correlation (73) estimates the cross correlation (72) between the first signal and crosstalk signal (71) and/or estimates said auto-correlation (71) referencing to said compensation signal (ik(t)).

19. Compensation circuit according to claim 18, wherein said device for interference detection (74) estimates the relevant correlations (71,72) again, taking into account the new parts of the signal, and the corresponding actual estimation Sa is compared with previously used estimation Sn for new calculations of the estimation Sn+1 of the relevant correlations.

20. Compensation circuit according to claim 19, wherein said device for interference detection (74) starts calculation of the current assessment Sa versus previously used estimation Sn in order to obtain new estimation Sn, performing that by the following formula:

$$Sn+1 = k * Sa + (1-k) * Sn$$

where k is a coefficient between 0 and 1.

21. Compensation unit (90) for a telecommmunication system with at least two signal lines (1, 1') from a trunk group (91), with one or more compensation circuits (10) with compensation devices (11-13), which have input for signal for interference (11), compensation control (12) and controlled current source (13), serving for compensation of a crosstalk signal at the first signals where said crosstalk signals come from one or several sources of secondary signals of such kind that a compensation switching (10) can be connected with each signal line (1, 1 ') from said trunk group (91), thereby generating a compensation current (ik(t)), which can be controlled and which serves as a parallel power supply, and allows continuous course of signal cables, at least for the DC (1,1') in compensation of said crosstalk signals over these signal lines (1,1').

22. Compensation unit according to claim 21, wherein an input for signal for interference (11) of a compensation device (11-13) can be loaded with cable (1,1') with signal for interference that is generated according to the first signal in another first cable (1,1').

23. Compensation unit according to claim 21 or 22, wherein a classification unit is available (103), which classifies the few first signals over the few first cables (1,1') and/or crosstalk signal in view of capacity for interference and/or possibility of interference, and there is a a distribution unit (101, 102), which distributes connections and/or input for signal for interference (11) of the compensation switching (10) with view of the results of the classification of one of said first lines (1, 1'), of said crosstalk signal, respectively.

24. Compensation unit according to claim 23 and 14, wherein the classification unit makes classification based on said estimated auto-correlations (71).

25. Compensation device according to claim 1, wherein first signal cable (1, 1') between connections (96, 96', 96"; 97, 97', 97") is interrupted or is passing through one or several delayi circuits (94, 94', 94"; 95, 95', 95"), the first signal cable (1) is a bidirectional signal cable, the source of the crosstalk signal is another signal line(1'), which is preferably bidirectional and/or is adjacent to the first signal line (1) or the signal cable (1) is a pair of wires (1a, 1b) and compensation switching (10) does not have the characteristics of fork switching.

26. Compensation method for the crosstalk signal in a telecommunication system with at least two signal lines (1, 1') from a trunk group (91), with at least one compensation switching (10) with one compensation device (11-13), which has an input for signal for interference (11), compensation control (12) and controlled current source (13), in which

   - for compensation of said crosstalk signal in the first signal line due to a crosstalk signal with the view of the crosstalk signal, a compensation current is provided (ik(t)) and powered in parallel in the first signal cable (1) and
   - is possible continuous course of signal lines at least for the DC (1,1') and without a hybrid circuit a compensation of the crosstalk signal by these signal lines is possible (1,1').

**Revendications**

1. Circuit de compensation (10) pour la détermination et compensation des signaux parasites, surtout d'un signal de diaphonie d'une source de diaphonie dans un système de transmission d'informations avec au moins deux lignes de signaux (1, 1') d'un groupe de lignes (91), avec un dispositif de compensation (11 - 13), lequel présente:

   - une entrée de signaux parasites (11), laquelle réceptionne un signal parasite conformément à la source de diaphonie,
   - une commande de compensation (12) connectée à l'entrée de signaux parasites (11),
   - une source de signaux de compensation (13) connectée à la commande de compensation (12), laquelle présente une source de courant commandable et laquelle génère un signal de compensation pour être fournie comme premier signal à la première ligne de signaux (1) conformément au signal parasite, cependant un courant de compensation commandé (ik(t)) est généré comme signal de compensation pour une alimentation parallèle,
   - telle que, sans qu'on utilise des filtres de séparation des directions de réception et d'émission des signaux de lignes de signaux (1, 1'), les lignes de signaux (1, 1') ne sont pas interrompues au moins pour un courant continu pour la compensation de diaphonie de ces lignes de signaux (1, 1').

2. Circuit de compensation selon revendication 1, **caractérisé en ce que** la première ligne de signaux (1) est une paire de lignes (1a, 1b) et la source de courant commandée est connectée entre les lignes de paire de lignes (1a, 1b) ou elle sont seulement connectée à une ligne, dans lequel une deuxième source de courant est connectée à l'autre ligne de paire de lignes (1a, 1b).

3. Circuit de compensation selon revendication 1 ou 2, **caractérisé en ce que** le courant de compensation (ik(t)) est ajusté conformément aux impédances ($Z_l$, $Z_r$) à la sortie de la source de courant.

4. Circuit de compensation selon revendication 1, **caractérisé en ce que** le dispositif de compensation (11-13) est équipé d'un filtre adaptif

5. Circuit de compensation selon revendication 2, **caractérisé en ce qu'**il y a deux connexions (16, 17) pour connecter le circuit avec la première ligne de signaux (1) et une conduite (18b) étant située entre les connexions (16, 17) de la première ligne de signaux (1), le courant de compensation commandé (ik(t)) alimente la conduite (18) en parallèle.

6. Circuit de compensation selon revendication 1, **caractérisé en ce que** la commande de compensation (12) est équipée d'un bloc de compensation analogue et d'un autre digital (41, 42).

7. Circuit de compensation selon revendication 6, **caractérisé en ce que** le bloc de compensation analogue et le bloc de compensation digital (41, 42) génèrent des grandeurs de compensation alimentées en parallèle.

8. Circuit de compensation selon revendication 6 ou 7, **caractérisé en ce que** le dispositif de compensation (11 - 13) génère le signal de compensation (ik(t)) à l'aide d'une réponse d'impulsion de diaphonie (33), le bloc de compensation analogue (41) simule une première partie (31) et le bloc de compensation digital (42) simule une deuxième partie de la réponse d'impulsion et dans lequel la deuxième partie (32) est retardée par rapport de la première partie (31).

9. Circuit de compensation selon revendication 5, **caractérisé en ce qu'**il y a un ou plusieurs circuits de délai (14, 15) devant une ou les deux connexions (16, 17) pour retarder le premier signal.

**EP 1 775 851 B1**

**10.** Circuit de compensation selon revendication 9, **caractérisé en ce que** les circuits de délai (14, 15) sont des circuits analogues et de préférence ils possèdent deux inductivités en série (51) avec deux capacités (52) étant connectées en croisé.

**11.** Circuit de compensation selon revendications 5 et 9, **caractérisé en ce que** il y a une conduite (18b) pour conduire le signal entre les connexions (16, 17), la conduite (18b) est connectée au circuit de délai (14, 15).

**12.** Circuit de compensation selon revendications 1 jusqu'à 11, **caractérisé en ce que** le dispositif de compensation (11 - 13) possède :

- un détecteur de caractéristiques des signaux parasites (74) pour la détermination des caractéristiques des signaux parasites (75) caractérisant la diaphonie au moyen du premier signal et du signal de diaphonie et
- un générateur de signal de compensation, lequel génère en fonction du signal parasite le signal de compensation.

**13.** Circuit de compensation selon revendication 12, **caractérisé en ce qu'**il y a un circuit commutateur (19) à l'aide duquel le signal de compensation de la première ligne (1) est connecté ou déconnecté et un dispositif de commande (12) commandant le circuit commutateur (19) de telle manière que le signal de compensation (ik(t)) est déconnecté de la première ligne (1), si le détecteur de caractéristiques des signaux parasites (74) mesure le signal parasite entre le premier signal et le signal de diaphonie.

**14.** Circuit de compensation selon revendication 12 ou 13, **caractérisé en ce que** le détecteur de caractéristiques des signaux parasites (74) évalue la corrélation mutuelle (72) entre le premier signal et le signal de diaphonie et évalue les autocorrélations des signals.

**15.** Circuit de compensation selon revendication 14, **caractérisé en ce que** le détecteur de caractéristiques des signaux parasites (74) évalue la réponse d'impulsion (33) du système de diaphonie en tant que signal parasite conformément à la corrélation mutuelle (72) et à l'autocorrélation (71).

**16.** Circuit de compensation selon revendications 12 jusqu'à 15, **caractérisé en ce que** le dispositif de compensation (11 - 13) possède un détecteur de corrélation systématique (73) pour la détermination d'une corrélation systématique entre le premier signal et le signal de diaphonie et que le détecteur de caractéristiques des signaux parasites (74) détermine la corrélation mutuelle (72) entre le premier signal et le signal de diaphonie en tenant compte de la corrélation systématique (73).

**17.** Circuit de compensation selon revendication 16, **caractérisé en ce que** le détecteur de corrélation systématique (73) détermine la corrélation systématique conformément aux paramètres déjà connus ou aux informations surtout conformément d'une supposition d'une forme d'ondes d'une partie de signal corrélée avec un ou plusieurs paramètres ouverts.

**18.** Circuit de compensation selon revendication 15, **caractérisé en ce que** le détecteur de caractéristiques des signaux parasites évalue la corrélation mutuelle (72) entre le premier signal et le signal de diaphonie et/ou l'autocorrélation (71) en tenant compte de signal de compensation (ik(t)), si la compensation est en cours.

**19.** Circuit de compensation selon revendication 18, **caractérisé en ce que** le détecteur de caractéristiques des signaux parasites (74) évalue les corrélations (71, 72) plusieurs fois en tenant compte de nouvelles parties de signaux et calcule la nouvelle évaluation Sn+1 à utiliser à l'aide de l'évaluation actuelle Sa respective avec l'évaluation utilisée jusqu'ici Sn des corrélations respectives.

**20.** Circuit de compensation selon revendication 19, **caractérisé en ce que** le détecteur de caractéristiques des signaux parasites (74) calcule la nouvelle évaluation Sn+1 à utiliser à l'aide de l'évaluation actuelle Sa avec l'évaluation utilisée jusqu'ici Sn selon la formule suivante :

$$Sn+1 = k * Sa + (1 -k) * Sn$$

où k est un coefficient entre 0 et 1.

21. Unité de compensation (90) dans un système de transmission d'informations avec au moins deux ligne de signaux (1, 1') d'un groupe de lignes (91), avec un ou plusieurs circuits de compensation (10) avec un dispositif de compensation (11 - 13), possédant une entrée de signaux parasite (11), une commande de compensation (12) et une source de courant commandée (13) pour la compensation de diaphonie dans les premiers signaux à cause des signaux de diaphonie d'une ou plusieurs sources de diaphonie de telle manière que chacun des circuits de compensation (10) est connectable avec chacune des première lignes (1, 1') du groupe de lignes (91) où un courant de compensation commandé (ik(t)) est généré pour une alimentation en parallèle et une conduite non interrompue de lignes de signaux (1, 1') au moins pour un courant continu est rendu possible pour la compensation de diaphonie sur ces lignes de signaux (1, 1').

22. Unité de compensation selon revendication 21, **caractérisé en ce que** l'entrée de signaux parasites (11) d'un dispositif de compensation (11 - 13) d'une première ligne (1, 1') porte un signal parasites, lequel est généré conformément au premier signal à une autre première ligne (1, 1').

23. Unité de compensation selon revendication 21 ou 22, **caractérisé en ce qu'**il y a unité de classification (103), laquelle classifie les plusieurs premiers signaux sur les plusieurs premières lignes (1, 1') et/ou un signal de diaphonie conformément à leur capacité de brouiller et/ou à leur niveau de signaux parasites et il y a une unité d'attribution (101, 102), laquelle attribue les connexions et/ou l'entrée de signaux parasites ( 11 ) d'un circuit de compensation (10) conformément au résultat de classification à une des premières lignes (1, 1') respectivement à un signal de diaphonie.

24. Unité de compensation selon revendications 23 et 14, **caractérisé en ce que** l'unité de classification effectue la classification à l'aide de l'autocorrélation estimée (71).

25. Circuit de compensation selon revendication 1, **caractérisé en ce que** la première ligne de signaux (1, 1') n'est pas interrompue entre les connexions (96, 96', 96", 97, 97', 97") ou elle est connectée avec un ou plusieurs éléments de délai, que la première ligne de signaux (1) est une ligne de signaux bidirectionnelle, que la source de diaphonie est une autre ligne de signaux (1') laquelle est de préférence bidirectionnelle et/ou elle est voisin de la première ligne de signaux (1) ou une ligne de signaux (1) est une paire de lignes (1a, 1b) et que le circuit de compensation (10) ne possède pas de filtre de séparation.

26. Méthode de compensation de diaphonie dans un system de transmission d'informations avec au moins deux lignes de signaux (1, 1') d'un groupe de lignes (91), avec au moins un circuit de compensation (10) avec un dispositif de compensation (11 - 13), lequel possède une entrée de signaux de diaphonie (11), une commande de compensation (12) et une source de courant commandable (13), dans lequel :

- pour la compensation de diaphonie dans la première ligne de signaux à cause d'un signal de diaphonie conformément au signal de diaphonie un courant de compensation (ik(t)) est généré et il alimente en parallèle la première ligne de signaux (1) et
- au moins pour un courant continu les lignes de signaux (1, 1') sont sans interruptions et une compensation de diaphonie sur ces lignes de signaux (1, 1') sans filtre de séparation est rendu possible.

Fig. 1

Fig. 2

## Fig. 3

## Fig. 4

Fig. 5a

Fig. 5b

Fig. 6a

Fig. 6b

Fig. 7

Fig. 8

Fig. 9

Fig. 10

**EP 1 775 851 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03009490 A3

- US 5271037 A